# EUROPÄISCHE PATENTSCHRIFT

(11) **EP 2 556 000 B1**
(45) Veröffentlichungstag und Bekanntmachung des Hinweises auf die Patenterteilung: **14.05.2014**
(21) Anmeldenummer: 11724117.4
(22) Anmeldetag: 31.03.2011
(51) Int. Cl.: B65G 1/137

(54) **VERFAHREN ZUM KOMMISSIONIEREN UND KOMMISSIONIERSYSTEM**
METHOD AND SYSTEM FOR COMMISSIONING
PROCÉDÉ ET SYSTÈME DE PRÉPARATION DES COMMANDES

(30) Priorität: 19.04.2010 AT 25710 U; 02.04.2010 AT 5402010
(43) Veröffentlichungstag der Anmeldung: 13.02.2013
(73) Patentinhaber: TGW Mechanics GmbH, 4600 Wels (AT)
(72) Erfinder: WOLKERSTORFER, Christoph, A-4600 WeIs (AT); REISCHL, Josef, A-4623 Gunskirchen (AT)
(74) Vertreter: Burger, Hannes
(86) Internationale Anmeldenummer: PCT/AT2011/000158
(87) Internationale Veröffentlichungsnummer: WO 2011/120067

(56) Entgegenhaltungen:
- EP-A1- 0 847 939
- EP-A1- 2 050 695
- EP-B1- 1 572 558
- WO-A1-2009/143548
- DE-U1-202009 009 773
- JP-A- 2009 214 987

## Beschreibung

Die Erfindung betrifft ein Verfahren zum Kommissionieren von Gegenständen aus Lagerbehältern in Auftragsbehälter durch eine Kommissionierperson an einer Kommissionierstation, bei dem ein Lagerbehälter mittels einer ersten Förderbahn zur Kommissionierstation angefördert und von einem Lastaufnahmemittel von einem ersten Niveau von der ersten Förderbahn übernommen und auf ein zweites Niveau bewegt wird, in welchem der Lagerbehälter sich in einer Bereitstellungsposition für die Kommissionierperson befindet und von dieser Gegenstände aus einem Lagerbehälter in zumindest einen Auftragsbehälter kommissioniert werden. Des Weiteren betrifft die Erfindung ein Kommissioniersystem zum Kommissionieren von Gegenständen aus Lagerbehältern in Auftragsbehälter durch eine Kommissionierperson, mit einer Kommissionierstation, welche an eine erste Förderbahn zum Transport von Lagerbehältern und eine zweite Förderbahn zumindest zum Transport von Auftragsbehältern angeschlossen ist.

Zur Erhöhung der Leistung von Kommissioniersystemen werden zunehmend auch sogenannte "Ware-zum-Mann"-Kommissioniersysteme realisiert, bei denen Lagerbehälter mit zu kommissionierenden Artikeln oder Gegenständen zu einer Kommissionierstation gefördert werden und an dieser durch die Kommissionierperson Gegenstände aus den Lagerbehältern entnommen und auftragsgemäß in sogenannte Auftragsbehälter verbracht werden. Dadurch kann die sogenannte Pickleistung einer Kommissionierperson erhöht werden, da deren Wege zum Sammeln der benötigten Gegenstände minimiert werden und dadurch mehr Pickvorgänge pro Zeiteinheit durchgeführt werden können. Bei derartigen Kommissioniersystemen ist eine Kommissionierstation oder ein Kommissionierplatz über eine Fördertechnik mit dem Lager für die Lagerbehälter verbunden und werden diese automatisch zu den Kommissionierstationen gefördert.

Im Rahmen dieser Erfindung wird unter einem Behälter nicht nur ein Behältnis für einen oder mehrere Gegenstände verstanden, sondern auch alle sonstigen Mittel, mit denen ein oder mehrere Gegenstände zu einer Lagereinheit oder einer Transporteinheit zusammengefasst werden können, wie beispielsweise auch Paletten usw.

Unter Lagerbehältern wird ein Behälter verstanden, in dem ein oder mehrere Gegenstände für eine spätere Kommissionierung in einem Lager bereitgehalten werden können und aus dem während eines Kommissioniervorgangs ein oder mehrere oder alle Gegenstände entnommen werden.

Unter einem Auftragsbehälter werden Behälter verstanden, in die gemäß einem zu erfüllenden Kommissionierauftrag zum Beispiel gemäß einem Lieferauftrag aus einem oder verschiedenen Lagerbehältern entnommene Gegenstände eingefüllt werden und diese Auftragsbehälter anschließend auftragsgemäß weiterbearbeitet werden, zum Beispiel an einen bestimmten Kunden ausgeliefert werden.

An einer derartigen Kommissionierstation werden im Arbeitsbereich einer Kommissionierperson im Allgemeinen mehrere Auftragsbehälter in ergonomisch günstiger Entfernung und Position bereitgehalten und der Kommissionierperson weiters ebenfalls in ergonomisch günstiger Position nacheinander die verschiedenen Lagerbehälter mit den zu kommissionierenden Gegenständen bereitgestellt.

Die Fördertechnik derartiger Kommissioniersysteme umfasst dabei im Allgemeinen zumindest eine Förderbahn für die Versorgung der Kommissionierperson mit Lagerbehältern als auch eine Förderbahn für den Abtransport von fertiggestellten Auftragsbehältern.

Ein gattungsgemäßes Kommissioniersystem ist beispielsweise aus EP 1572 558 B1 bekannt. Diese beschreibt einen Kommissionierplatz zum Kommissionieren von Artikeln aus Lagerbehältern durch eine Kommissionierperson, wobei der Kommissionierplatz an eine Fördertechnik, die eine durch einen Arbeitsbereich der Kommissionierperson hindurchführende Förderbahn aufweist, zumindest zum Antransport von Lagerbehältern angeschlossen ist. Um ein ergonomisch günstiges Andienen der Lagerbehälter für die Kommissionierperson zu bewirken, ist dabei die Förderbahn zumindest im Arbeitsbereich der Kommissionierperson um ihre Längsachse in Richtung der Kommissionierperson gekippt. Der Kommissionierperson wird dadurch die Öffnung eines Lagerbehälters ergonomisch günstig angeboten, wodurch einerseits eine optische Erfassung der zu entnehmenden Artikel erleichtert wird und darüber hinaus auch das Entnehmen der Gegenstände für die vor dem Lagerbehälter stehende Kommissionierperson wesentlich erleichtert wird.

Dieser Vorteil der ergonomisch günstigen Andienung von Lagerbehältern durch das Ankippen im Nahbereich der Kommissionierperson bewirkt jedoch eine zusätzliche Lärmbelastung für die Kommissionierperson sowie eine erhöhte Gefahr von Quetschungen durch bewegte Anlagenteile bzw. Lagerbehälter.

Aus EP 2050 695 A1 ist ein Verfahren und ein Kommissioniersystem gemäß den Oberbegriffen der Ansprüche 1 und 3 bekannt, bei dem Lagerbehälter an einer ersten Förderbahn angefördert und von dieser in einer ersten Position mittels eines Lastaufnahmemittels auf ein höheres Niveau angehoben werden, in dem sich die Lagerbehälter in einer Bereitstellungsposition für die Kommissionierperson befinden. Die Lagerbehälter werden dabei in der Bereitstellungsposition auf einem weiterem Förderer abgelegt, mit dem sie nach Beendigung des Kommissioniervorgangs von der Kommissionierperson weg etwa in horizontaler Richtung abgefördert werden und in Folge in einer zweiten Position auf eine weitere Förderbahn für Lagerbehälter abgesenkt werden. Dadurch, dass der Lagerbehälter im Nahbereich der Kommissionierperson zwischen unterschiedlichen Förderern zu übergeben ist, entstehen zusätzliche Lärmemissionen und durch die erforderlichen Verstellbewegungen der Förderer zueinander zusätzliche Quetschgefahren.

Das Dokument US 4,909,697 A offenbart einen Arbeitsplatz an einem Kommissioniersystem mit einem verstellbaren Arbeitstisch mit dem Behälter in horizontaler Richtung zu einer Kommissionierperson angefördert, dieser bereitgestellt und anschließend wieder in horizontaler Richtung abgefördert werden können. Der Arbeitstisch nimmt dazu nacheinander eine höher gelegene Aufnahmeposition, eine Arbeitsposition und eine tiefer gelegene Abgabeposition ein. In der Arbeitsposition kann der Arbeitstisch zur Kommissionierperson hingeneigt sein. Zum Aufnehmen oder Abgeben von Behältern befindet sich der Arbeitstisch in horizontaler Lage, während er in der Arbeitsposition zur Kommissionierperson hin geneigt sein kann. Weiters kann die Kommissionierperson die Arbeitshöhe des geneigten Arbeitstisches einstellen, wodurch Gegenstände möglichst schnell und einfach gehandhabt werden können. Das Neigen und Verstellen der Höhe des Arbeitstisches mit dem Behälter erfolgt dabei unmittelbar vor der Kommissionierperson.

Die Aufgabe der Erfindung besteht darin, ein Verfahren zum Kommissionieren bzw. eine Kommissionierstation bereit zu stellen, bei der die Arbeitsbelastung für eine Kommissionierperson weiter verringert und dadurch die Leistung eines Kommissioniersystems weiter erhöht werden kann.

Die Aufgabe der Erfindung wird durch ein Verfahren der eingangs genannten Art gelöst, bei dem ein Lagerbehälter nach der Beendigung eines Kommissioniervorganges von der Kommissionierstation über die erste Förderbahn zu einer Übergabestation und dort über einen Übergabeförderer auf eine zweite Förderbahn gefördert wird, auf der Lagerbehälter und Auftragsbehälter transportiert werden.

Die Aufgabe der Erfindung wird weiterhin mit einem Kommissioniersystem der eingangs genannten Art gelöst, wobei das Kommissioniersystem ferner eine von der Kommissionierstation getrennt angeordnete Übergabestation zur Übergabe eines Lagerbehälters zwischen der ersten Förderbahn und der zweiten Förderbahn umfasst, an der ein Übergabeförderer die erste Förderbahn mit der zweiten Förderbahn verbindet.

Durch die von der Kommissionierstation und damit von der Kommissionierperson distanzierte Anordnung der Übergabestation wird die Lärmbelastung für die Kommissionierperson durch die größere Distanz zum Übergabeförderer wesentlich reduziert, und es kann die Übergabestation durch die getrennte Anordnung einfacher mit einem schalldämmenden Gehäuse versehen werden.

Bei Anordnung einer Übergabestation an der Stirnseite einer ersten Förderbahn bildet diese einen baulichen Abschluss für ein derartiges Kommissioniersystem. Durch deren von der Kommissionierstation unabhängigen Aufbau kann diese modulartig ohne Beeinflussung der Kommissionierstation in Aufbau oder Positionierung verändert werden.

Durch die Übergabe der abgefertigten Lagerbehälter an die zweite Förderbahn, die für den Abtransport von fertig kommissionierten Auftragsbehältern eingesetzt wird, kann zudem eine eigene Förderbahn für das Abtransportieren der Lagerbehälter aus dem Kommissioniersystem eingespart werden, wodurch der bauliche Aufwand für ein derartiges System geringer wird. Gleichzeitig ergibt die durch die Kommissionierstation hindurchführende und über diese hinausragende erste Förderbahn die Möglichkeit, die Kommissionierstation bei Bedarf in beide Richtungen zu versetzen oder bei entsprechender Länge der Förderbahnen eine zusätzliche Kommissionierstation anzuordnen.

Vorteilhaft ist es, wenn der Lagerbehälter bei der Bewegung zwischen dem ersten Niveau und dem zweiten Niveau in einer zur Kommissionierperson hin geneigten Lage gehalten wird, wobei nach einem

Kommissioniervorgang das Lastaufnahmemittel mit dem Lagerbehälter wieder vom zweiten Niveau auf das erste Niveau bewegt wird, in welchem der Lagerbehälter auf die erste Förderbahn übergeben wird. Gleichermaßen ist es von Vorteil, wenn das Kommissioniersystem ein zwischen einem ersten Niveau und einem zweiten Niveau verfahrbares Lastaufnahmemittel aufweist, welches dazu eingerichtet ist, von einem ersten Niveau einen Lagerbehälter vom Lastaufnahmemittel von der ersten Förderbahn zu übernehmen und auf dem zweiten Niveau einen Lagerbehälter in einer Bereitstellungsposition für die Kommissionierperson anzudienen, wobei das Lastaufnahmemittel eine Aufnahmefläche aufweist, die den Lagerbehälter zwischen dem ersten Niveau und dem zweiten Niveau in einer um einen Winkel zur Kommis-sionierperson hin geneigten Lage stützt. Dadurch, dass sich ein Lagerbehälter bereits bei der Bewegung zwischen dem ersten Niveau und dem zweiten Niveau in einer zur Kommissionierperson hin geneigten Lage befindet und nach einem Kommissioniervorgang das Lastaufnahmemittel mit dem Lagerbehälter in der selben geneigten Lage wieder vom zweiten Niveau auf das erste Niveau bewegt wird, auf die erste Förderbahn übergeben wird und erst in dieser von der Kommissionierperson distanzierten Lage wieder in die für den Fördervorgang auf der ersten Förderbahn vorgesehene Lage, im Allgemeinen eine horizontale Lage zurückgekippt wird, sind zum einen die beim Kippvorgang entstehenden Lärmemissionen als auch durch den Kippvorgang mögliche Verletzungsgefahren nicht im Nahbereich der Kommissionierperson vorhanden und dadurch die Arbeitsbedingungen für die Kommissionierperson deutlich verbessert.

Da die mit einer möglichen Lärmemission verbundene Kippbewegung des Lagerbehälters beim Aufnehmen durch das Lastaufnahmemittel von der ersten Förderbahn von der Kommissionierperson distanziert erfolgt, ist es vorteilhaft, wenn die gekippte Lage des Lagerbehälters beim Anheben in die Bereitstellungsposition nicht mehr verändert wird und das Lastaufnahmemittel dazu an einer Führung translatorisch zwischen dem ersten Niveau und dem zweiten Niveau verstellbar geführt ist. Im einfachsten Fall kann die Führung geradlinig sein, also durch eine Linearführung gebildet sein, es ist jedoch auch denkbar, die translatorische Bewegung des Lagerbehälters durch eine sonstige Verstellkinematik mit der eine translatorische oder geradlinige Bewegung des Lagerbehälters bewirkt werden kann, beispielsweise mit Hubarmen, die Bestandteile eines Koppelgetriebes sind.

Zur Vergrößerung der Fußfreiheit für die Kommissionierperson kann weiters die Richtung der Hubbewegung von der vertikalen Richtung abweichen, wozu die Führung des Lastaufnahmemittels gegenüber der Vertikalen in Richtung zur Kommissionierperson geneigt erfolgt. Der Neigungswinkel für die Führung beträgt vorzugsweise etwa 15°, kann jedoch auch innerhalb einer Grenze von 5° und 30° liegen.

Zum Schutz der Kommissionierperson vor möglichen Verletzungen durch die Verstellbewegung des Lagerbehälters in die Bereitstellungsposition ist es von Vorteil, wenn der Bewegungsraum eines mit dem Lastaufnahmemittel bewegten Lagerbehälters in Richtung zur Kommissionierperson mittels einer dritten Schachtwand begrenzt ist. Die dritte Schachtwand verhindert, dass Körperteile der Kommissionierperson in den erforderlichen Bewegungsraum des Lagerbehälters bzw. des Lastaufnahmemittels ragen und möglicherweise verletzt werden. Gleichzeitig kann die dritte Schachtwand eine zusätzliche Absicherung des Lagerbehälters gegen Abrutschen vom Lastaufnahmemittel bewirken. Darüber hinaus wird in vorteilhafter Weise die Aufnahmefläche des Lastaufnahmemittels bis knapp unterhalb der Oberkante der Schachtwände verstellt und befindet sich somit der Lagerbehälter stets mit einem Teil seiner Höhe innerhalb des Schachtes. Aus der Sicht der Kommissionierperson wird dadurch ein Lagerbehälter innerhalb des Schachtes in die Bereitstellungsposition angehoben, daher auch wenn der Lagerbehälter in der Bereitstellungsposition angedient wird, und dadurch, dass die Unterkante des Lagerbehälters nicht aus diesem Schacht austritt, kann auch keine zusätzliche Quetschstelle entstehen. Der Lagerbehälter wird von den Schachtwänden auf zumindest drei Seiten umgeben, sodass Verletzungsgefahren vermieden werden. Der Schacht bildet am oberen Ende eine Austrittsöffnung für einen Lagerbehälter und am unteren Ende eine Eintrittsöffnung für einen Lagerbehälter aus, wobei die Austritts- und Eintrittsöffnung auf zumindest drei Seiten von den Schachtwänden begrenzt wird. In der Bereitstellungsposition kann der Lagerbehälter aus der Austrittsöffnung herausragen oder mit seiner Oberkante bündig mit den Schachtwänden abschließen.

Der Schacht bildet ferner auf der Innenseite mit seinen Schachtwänden Begrenzungsflächen für den Lagerbehälter aus. Befindet sich der Lagerbehälter in seiner Förderposition unterhalb des Schachtes und weicht der Lagerbehälter aus irgendwelchen Gründen von seiner zentrischen Position gegenüber dem Schacht ab, kann auf der Bewegung des Lagerbehälters vom ersten Niveau in Richtung des Schachtes durch einen trichterartigen Einlaufbereich im Bereich der Eintrittsöffnung und/oder durch die Schachtwände die Positionsabweichung des Lagerbehälters relativ zum Schacht begrenzt werden.

Wenn ein Verstellantrieb des Lastaufnahmemittels mit einer Steuerungsvorrichtung der Kommissionierstation verbunden ist und die Steuerungsvorrichtung dem Verstellantrieb einen Wert für das zweite Niveau der Bereitstellungsposition vorgibt, wobei der Wert basierend auf der Höhe der Lagerbehälter errechnet wird und/oder mit einer Körperabmessung oder der Identität der Kommissionierperson verknüpft ist, wird eine variable Andienungshöhe durch die Steuerungsvorrichtung immer optimal an die Kommissionierperson angepasst und werden die zu kommissionierenden Lagerbehälter ergonomisch günstig bereitgestellt.

Wenn das Lastaufnahmemittel in Form einer Hubgabel ausgeführt wird, kann diese bei einer Förderbahn in Form eines Rollenförderers einfach zwischen die Rollen abgesenkt oder horizontal eingeführt werden und ein darauf positionierter Lagerbehälter angehoben werden. Dies ermöglicht eine einfache Bauart eines Bereitstellungsförderers mit dem ein Lagerbehälter von der ersten Förderbahn in die Bereitstellungsposition angehoben und anschließend wieder auf die erste Förderbahn abgesenkt werden kann.

Um die von der Kommissionierperson zurückzulegenden Wege kurz zu halten, ist von Vorteil, wenn benachbart zur Bereitstellungsposition, insbesondere beidseits dazu Stellplätze für die zu befüllenden Auftragsbehälter angeordnet sind und diese Stellplätze insbesondere um die Höhe der Auftragsbehälter niedriger gelegen sind, als die Oberkante eines Lagerbehälters in der Bereitstellungsposition. Die Oberkanten der Auftragsbehälter sind dadurch nicht höher positioniert als die Oberkante des Lagerbehälters und müssen die Gegenstände von der Kommissionierperson nicht zusätzlich angehoben werden, wodurch ebenfalls die Arbeitsbelastung geringer gehalten werden kann.

Damit fertig kommissionierte Auftragsbehälter mit geringer Belastung der Kommissionierperson an die zweite Förderbahn übergeben werden können, ist es von Vorteil, wenn für leichte Auftragsbehälter die Stellplätze als Gleitflächen ausgeführt sind, von denen die fertigen Auftragsbehälter einfach nach hinten abgeschoben werden oder wenn, im Fall von schweren Auftragsbehältern, beispielsweise in Form von Paletten, die Stellplätze selbst als Förderer ausgebildet sind oder durch solche an die zweite Förderbahn angeschlossen sind. Ein Fördervorgang mittels eines angetriebenen Förderers wird dann beispielsweise erst nach Freigabe durch die Kommissionierperson eingeleitet.

Das Fördern der Auftragsbehälter kann dabei manuell durch die Kommissionierperson oder motorisch erfolgen. Die Stellplätze können weiters leicht in Richtung zur Kommissionierperson geneigt werden, wodurch, ähnlich wie bei den Lagerbehältern in der Bereitstellungsposition eine ergonomisch günstige Andienung gegeben ist.

Zum Wechsel eines in der Bereitstellungsposition befindlichen Lagerbehälters muss dieser mittels des Lastaufnahmemittels abgesenkt und auf die erste Förderbahn übergeben werden, anschließend ein nachfolgender Lagerbehälter über das Lastaufnahmemittel positioniert und von diesem wieder in die Bereitstellungsposition angehoben werden. Damit die für diesen Austausch der Lagerbehälter erforderliche Zeit keine Wartezeit für die Kommissionierperson darstellt, ist es von Vorteil, wenn zumindest zwei voneinander unabhängige und mit eigenen Verstellantrieben versehene Lastaufnahmemittel vorgesehen sind. Dadurch können Lagerbehälter in zwei oder mehr nebeneinander angeordneten Bereitstellungspositionen angedient werden und ein Lagerbehälter gegen einen anderen ausgetauscht werden, während die Kommissionierperson aus einem danebenliegenden Lagerbehälter weiterkommissioniert.

Damit in der Bereitstellungsposition die Lagerbehälter möglichst nahe zur Kommissionierperson angedient werden können, ist es weiters von Vorteil, wenn die Führung bzw. der Aufnahmefläche am Lastaufnahmemittel auf der von der Kommissionierperson abgewandten Seite angeordnet ist. Zusätzlich wird durch diese Anordnung der Führung auf der Hinterseite des Lastaufnahmemittels ein geringer Platzbedarf zur Seite erforderlich, wodurch benachbarte Bereitstellungspositionen oder benachbarte Auftragsbehälter in möglichst geringem Abstand angeordnet werden können, und dadurch die Wege für die Kommissionierperson möglichst kurz gehalten sind.

Eine erfindungsgemäße Kommissionierstation kann vorteilhaft in beliebigen Kommissioniersystemen eingebunden sein, die neben der eigentlichen Kommissionierstation zumindest auch die Abstellplätze für die Auftragsbehälter ggf. Vorbereitungsplätze für Auftragsbehälter und die erste Förderbahn sowie die zweite Förderbahn umfassen.

Da bei derartigen Kommissioniersystemen die Förderbahn zum Abfördern der fertigen Auftragsbehälter zumeist nicht den Kapazitätsengpass darstellt, ist es von Vorteil, wenn an der zweiten Förderbahn zwei oder mehrere erfindungsgemäße Kommissionierstationen angeordnet werden, da dadurch Bauaufwand eingespart und auch eine raumsparende Anordnung der Kommissionierplätze möglich ist. Insbesondere können derartige Kommissionierstationen etwa spiegelsymmetrisch beidseitig der zweiten Förderbahn angeordnet sein.

Vorteilhaft ist eine Kommissionierstation, bei der das Lastaufnahmemittel eine automatisierte Fördervorrichtung aufweist, welche eine Aufnahmefläche für einen Lagerbehälter ausbildet und mit der ein Lagerbehälter zwischen dem Lastaufnahmemittel und dem zweiten Förderband transportierbar ist. Der Vorteil besteht darin, dass ein abgefertigter Lagerbehälter ausgehend von der Bereitstellungsposition ohne Umsetzen auf eine weitere Fördervorrichtung direkt an die zweite Förderbahn übergeben werden kann und dadurch die mit dem Umsetzen des Lagerbehälters zwischen zwei Förderern verbundenen Lärmemissionen vermieden sind. Die Aufnahmefläche, die den Lagerbehälter beim Anheben von der ersten Förderbahn und beim Bereitstellen für die Kommissionierperson stützt, dient gleichzeitig dem anschließenden Weiterfördern des Lagerbehälters zur zweiten Förderbahn. So könnte beispielsweise abweichend von der zuvor beschriebenen Kommissioniermethode der Lagerbehälter von der Bereitstellungsposition nicht nur wieder zurück auf die erste Förderbahn übergeben werden, sondern direkt an die zweite Förderbahn, wobei dies mit ein und demselben Förderer erfolgt und dadurch die Lärmbelastung für die Kommissionierperson reduziert ist.

Eine vorteilhafte Weiterbildung dieser Kommissionierstation besteht darin, dass das Lastaufnahmemittel zumindest ein endlos umlaufendes Förderorgan umfasst, mit dem ein am Lastaufnahmemittel aufgenommener Lagerbehälter in einer von der Verstellrichtung des Lastaufnahmemittels verschiedenen Förderrichtung bewegbar ist. Dadurch wird ebenfalls ermöglicht, dass der Lagerbehälter mit ein und demselben Lastaufnahmemittel von der ersten Förderbahn aufgenommen werden kann und im Anschluss an den Kommissioniervorgang in eine zur Hubbewegung unterschiedliche Förderrichtung weiterbewegt werden kann. Dadurch wird ebenfalls eine hohe Flexibilität einer derartigen Kommissionierstation erreicht, da ein Lagerbehälter ausgehend von der Bereitstellungsposition wahlweise wieder zurück auf die erste Förderbahn abgesenkt werden kann oder alternativ direkt an die zweite Förderbahn übergeben werden kann.

Der Abtransport des Lagerbehälters aus der Bereitstellungsposition kann besonders lärmarm erfolgen, wenn die Aufnahmefläche am Lastaufnahmemittel durch ein endlos umlaufendes Förderorgan gebildet ist, wie beispielsweise Riemen oder Gurte oder auch ein Förderband.

Eine derartige Kommissionierstation kann vorteilhaft in jedem Kommissioniersystem eingebunden sein, insbesondere wenn das Kommissioniersystem so ausgebildet ist, dass die erste Förderbahn und die zweite Förderbahn auf unterschiedlichem Niveau und seitlich versetzt zueinander verlaufen, wie es in den Ausführungsbeispielen enthalten ist.

Vorteilhaft ist es weiterhin, wenn eine Oberkante eines der Kommissionierperson zugewandten Wandteils zumindest auf das zweite Niveau in eine Arbeitsposition verstellt wird, bevor der Lagerbehälter auf dem zweiten Niveau bereitgestellt wird. Dadurch, dass zwischen dem Bereich, in dem die Lagerbehälter in die Bereitstellungsposition angehoben werden und der Kommissionierperson ein höhenverstellbares Wandelement vorgesehen ist, wird durch dieses einerseits verhindert, dass Körperteile in den Bewegungsraum der Lagerbehälter oder der Lastaufnahmemittel eindringen und dabei Stößen ausgesetzt werden können und andererseits ermöglicht die Höhenverstellbarkeit eine Anpassung dieses schützenden Wandelements an das zweite Niveau, auf das die Lagerbehälter in die Bereitstellungsposition angehoben werden. Dadurch, dass die Oberkante des Wandelements in seiner Arbeitsposition zumindest bis zum zweiten Niveau angehoben wird, ist sichergestellt, dass eine Unterkante eines Lagerbehälters oder ein Lastaufnahmemittel nicht oberhalb dieser Oberkante zu liegen kommt und dadurch eine Quetschstelle entstehen kann.

Die Anpassbarkeit der Höhenposition des Wandelements ist besonders vorteilhaft, wenn das zweite Niveau zur Erleichterung der Kommissioniertätigkeit in Abhängigkeit von der Behälterhöhe der Lagerbehälter oder einer Körperabmessung oder der Identität der Kommissionier-person festgelegt wird und variabel ist. Dadurch wird ohne Einbußen bei der Arbeitssicherheit eine Verbesserung der ergonomischen Bedingungen erzielt, da die Zugänglichkeit zu den Gegenständen im angedienten Lagerbehälter durch das Wandelement nicht beeinträchtigt wird und werden somit die Arbeitsbedingungen für die Kommissionierperson verbessert.

Die Höhenverstellung kann beispielsweise manuell durch die Kommissionierperson erfolgen, evtl. mit einem unterstützenden Antrieb zur Überwindung der Gewichtskräfte des Wandelements oder vollkommen automatisch.

Vorteilhaft kann es weiters sein, die Oberkante in der Arbeitsposition des Wandteils jeweils um einen Höhenbetrag oberhalb des zweiten Niveaus zu positionieren. Dieser Höhenbetrag bietet eine zusätzliche Sicherheit vor einem Austreten der Unterkante eines Lagerbehälters gegenüber der Oberkante des Wandteils und kann gleichzeitig einen Lagerbehälter vor dem Abrutschen von einem Lastaufnahmemittel schützten. Der Höhenbetrag kann beispielsweise ein fester Wert von mehreren Zentimetern sein.

Eine weitere Arbeitserleichterung für die Kommissionierperson kann darin bestehen, dass das zweite Niveau durch eine Steuervorrichtung festgelegt wird und der Wandteil mittels eines von der Steuervorrichtung angesteuerten Verstellantriebs automatisch in seiner Höhenposition verstellt wird. So kann nicht nur das zweite Niveau und damit die Bereitstellungsposition optimal an die Vorlieben oder Körperabmessungen einer Kommissionierperson angepasst werden, sondern auch der höhenverstellbare Wandteil optimal und ohne Zutun der Kommissionierperson eingestellt werden.

Eine Führung, die die Verstellbarkeit des Wandteils ermöglicht, kann vorteilhaft etwa parallel zu einer Führung des Lastaufnahmemittels verlaufen, wodurch der Platzbedarf für die Kommissionierstation gering gehalten wird und eine Begrenzung des Bewegungsraumes für die anzuhebenden Lagerbehälter durch einen Schacht möglich ist, wobei der Schachtquerschnitt durch die Höhenverstellung des Wandteils im Wesentlichen unverändert bleiben kann.

Der Wandteil ist vorzugsweise mit einem automatisierten Verstellantrieb gekoppelt, wodurch in Verbindung mit einer Steuervorrichtung und einer automatisierten Festlegung des zweiten Niveaus ohne zutun der Kommissionierperson eine optimale Höhe des Wandteils eingestellt werden kann.

Eine weitere Erleichterung für die Kommissionierperson kann darin bestehen, dass der Wandteil zumindest ein flächiges Stützelement zum Abstützen der Kommissionierperson während des Kommissioniervorganges umfasst. Im Zuge der Kommissioniertätigkeit kann es vorkommen, dass die Kommissionierperson sich über die Bereitstellungsposition beugen muss, um Gegenstände vom Boden tieferer Lagerbehälter zu ergreifen oder beispielsweise Handgriffe hinter der Bereitstellungsposition an einer Benutzerschnittstelle auszuführen, wobei ein derartiges Stützelement der Kommissionierperson hilft, ihr Gleichgewicht zu halten.

Eine weitere Möglichkeit die Arbeitsbedingungen für die Kommissionierperson zu verbessern besteht darin, die Kommissionierstation mit einer, insbesondere in Höhenrichtung, verstellbaren Ablage zu versehen, wodurch nicht nur die eigentlichen Handgriffe für die Durchführung der Kommissioniervorgänge ergonomisch günstig durchgeführt werden können, sondern auch Nebentätigkeiten wie die Bedienung von Benutzerschnittstellen, Druckern usw. oder sonstige Handgriffe erleichtert werden, indem diese auch in einer für die Kommissionierperson günstigen Position ausgeführt werden können.

Derartige Kommissionierstationen mit einem höhenverstellbaren Wandelement können in Kommissioniersystemen jeder Art vorteilhaft eingesetzt werden, insbesondere auch bei solchen, in denen die Kommissionierstation die Lagerbehälter in einer zur Kommissionierperson hin geneigten Lage in die Bereitstellungsposition verstellt oder bei Kommissionierstationen in denen das Lastaufnahmemittel eine automatisierte Fördervorrichtung aufweist, welche eine Aufnahmefläche für einen Lagerbehälter ausbildet und mit der ein Lagerbehälter zwischen dem Lastaufnahmemittel und der zweiten Förderbahn transportierbar ist.

Zur Unterstützung der Kommissionierperson kann vorgesehen sein, dass die Auftragsbehälter, in welche die aus dem bereitgestellten Lagerbehälter entnommenen Gegenstände einzufüllen sind, optisch markiert werden, beispielsweise indem die entsprechenden Auftragsbehälter durch Lichtsignale gekennzeichnet werden. Um Fehler bei den Kommissioniervorgängen zu vermeiden, kann weiters vorgesehen sein, dass die Einfüllöffnungen der Auftragsbehälter durch Lichtgitter überwacht sind, mit denen jeder Befüllvorgang an einen Auftragsbehälter registriert werden kann und dadurch Fehler beim Kommissionieren weitgehend unterbunden werden können. Da es sich dabei für sich alleine betrachtet um bekannten Stand der Technik handelt, werden Einzelheiten dazu nicht beschrieben sondern lediglich auf die vorteilhafte Kombination mit dem Erfindungsgegenstand hingewiesen.

Zum besseren Verständnis der Erfindung wird diese anhand der nachfolgenden Figuren näher erläutert.

Es zeigen jeweils in stark schematisch vereinfachter Darstellung:
- Fig. 1: eine Ansicht eines erfindungsgemäßen Kommissioniersystems;
- Fig. 2: einen Schnitt durch ein Kommissioniersystem gemäß Fig. 1 im Bereich der Kommissionierstation;
- Fig. 3: einen Schnitt durch ein Kommissioniersystem gemäß Fig. 1 im Bereich der Übergabestation;
- Fig. 4: einen Schnitt durch ein Kommissioniersystem gemäß Fig. 1 im Bereich der Auftragsbehälter;
- Fig. 5: eine Ansicht einer Ausführungsform des Lastaufnahmemittels;
- Fig. 6: eine Prinzipskizze einer möglichen Ausführungsform eines Kommissioniersystems;
- Fig. 7: einen Schnitt durch eine Kommissionierstation in einer weiteren Ausführungsform.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Unter der Höhe eines Behälters wird, falls nichts anderes angegeben ist, die Höhe von der Aufstandsfläche bis zu der für die Entnahme aus einem Behälter oder die Befüllung in einen Behälter maßgebliche Oberkante verstanden.

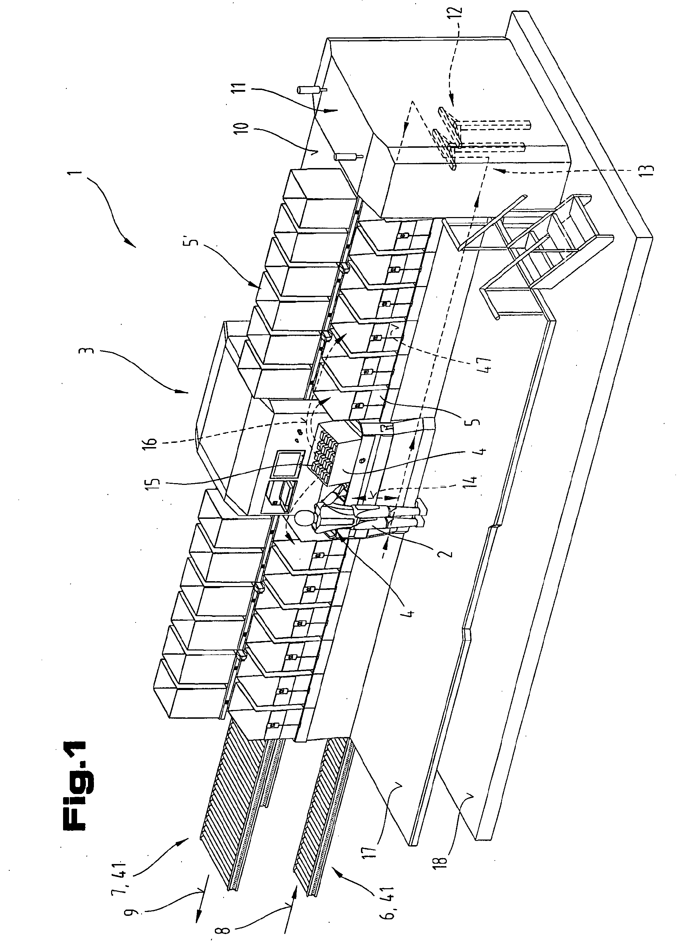

Fig. 1 zeigt eine Ansicht eines Kommissioniersystems 1, an dem eine Kommissionierperson 2 Kommissionieraufträge bearbeiten kann. Das Kommissioniersystem 1 umfasst dabei eine Kommissionierstation 3, an der der Kommissionierperson 2 Lagerbehälter 4 mit zu kommissionierenden Artikeln oder Gegenständen bereitgestellt werden. Gemäß den vorliegenden Kommissionieraufträgen entnimmt die Kommissionierperson 2 einem bereitgestellten Lagerbehälter 4 die erforderlichen Gegenstände und kommissioniert diese in Auftragsbehälter 5, die benachbart zur Kommissionierstation 3 bereitstehen. Im dargestellten Ausführungsbeispiel sind beidseits der Kommissionierstation, also links und rechts davon, jeweils sechs Auftragsbehälter 5 bereitgestellt. Die Lagerbehälter 4 sind beispielsweise durch Kisten oder Paletten oder ähnliche Transport- und Lagerhilfsmittel gebildet, die zum Lagern und automatisierten Fördern von einem oder mehreren Gegenständen geeignet sind. Die Auftragsbehälter 5 sind beliebige Behälter oder Transport- und Lagerhilfsmittel, die zur Aufnahme von Gegenständen geeignet sind und für weitere Lager- und Fördervorgänge geeignet sind, wie beispielsweise Schachteln, Kisten oder gleichwertiges.

Die Kommissionierstation 3 ist an eine erste Förderbahn 6 angeschlossen, über die Lagerbehälter 4 mit den zu kommissionierenden Gegenständen der Kommissionierstation 3 zugeführt werden. Weiters ist die Kommissionierstation 3 an eine zweite Förderbahn 7 angeschlossen, mit der nach Abschluss des Kommissioniervorgangs fertig kommissionierte Auftragsbehälter 5 aus dem Kommissioniersystem 1 abgefördert werden. Erste Förderbahn 6 und zweite Förderbahn 7 sind mit nicht dargestellten Lagern verbunden, in denen die Lagerbehälter 4 bzw. die fertiggestellten Auftragsbehälter 5 für die nachfolgende Bearbeitung gelagert werden können.

Im dargestellten Ausführungsbeispiel sind erste Förderbahn 6 und zweite Förderbahn 7 durch Rollenförderer gebildet, können jedoch auch durch sonstige geeignete Förderer gebildet sein, wie etwa Bandförderer, Riemenförderer, usw..

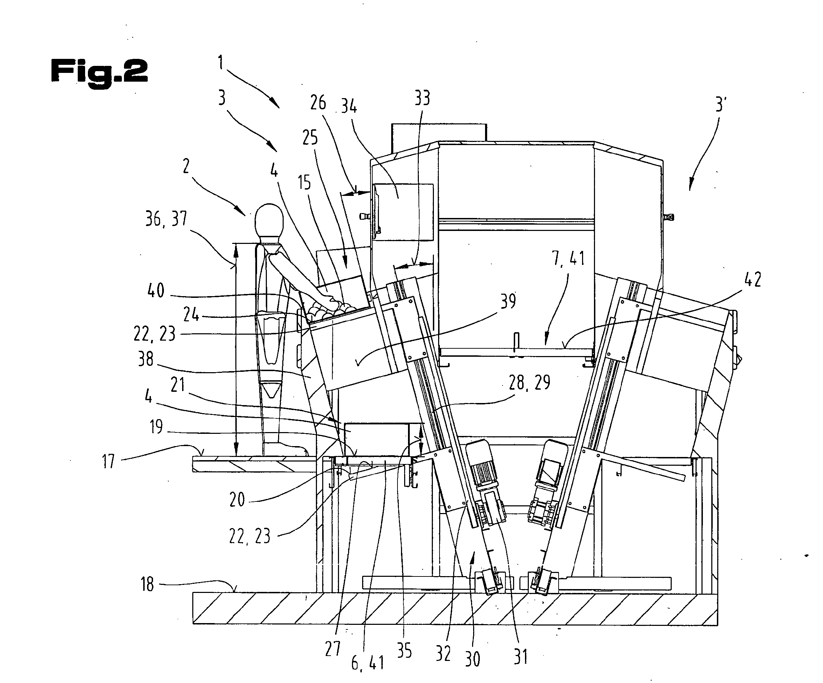

Für einen Kommissioniervorgang wird über die erste Förderbahn 6 ein Lagerbehälter 4 mit zu kommissionierenden Gegenständen zur Kommissionierstation 3 gefördert und in dieser durch ein in Fig. 1 nicht dargestelltes Lastaufnahmemittel von der ersten Förderbahn 6 aufgenommen und der Kommissionierperson 2 in einer ergonomisch günstigen Bereitstellungsposition angedient. Gemäß den vorliegenden Kommissionieraufträgen entnimmt die Kommissionierperson 2 dem bereitgestellten Lagerbehälter 4 die erforderlichen Gegenstände und füllt diese in die zur Befüllung mit diesen Gegenständen vorgesehenen Auftragsbehälter 5. Wie auch anhand von Fig. 2 beschrieben wird, befindet sich die erste Förderbahn 6 auf einem Niveau unterhalb der für die Kommissionierperson 2 ergonomisch günstigen Bereitstellungsposition, weshalb an der Kommissionierstation 3 ein Lagerbehälter 4 auf ein zweites höheres Niveau, das der entsprechenden Bereitstellungsposition entspricht, angehoben wird.

Damit das Entnehmen von Gegenständen aus dem bereitgestellten Lagerbehälter 4 für die Kommissionierperson 2 zusätzlich erleichtert wird, wird der jeweilige Lagerbehälter 4 der Kommissionierperson 2 in einer zu ihr hin geneigten Lage angedient, wobei ein Lagerbehälter 4 bereits bei der Bewegung in die Bereitstellungsposition diese geneigte Lage innehat. Da die Lagerbehälter 4 auf der ersten Förderbahn 6 in horizontaler Lage angefördert werden, erfolgt die erforderliche Kippbewegung bzw. Neigung des Lagerbehälters 4 zur Kommissionierperson 2 hin bei der Übernehmen eines auf der ersten Förderbahn 6 angeförderten Lagerbehälters 4 auf das Lastaufnahmemittel.

Ein für die Kommissionierung vorgesehener Lagerbehälter 4 wird demnach bereits in geneigter Lage in die Bereitstellungsposition verbracht, weshalb in der Bereitstellungsposition selbst keine Verstellung des Lagerbehälters 4 mehr erfolgen muss und dadurch im Nahbereich der Kommissionierperson 2 Lärmemissionen durch Kippbewegungen oder Kippvorgänge vermieden sind und weiters die Verletzungsgefahr durch Quetschen oder sonstige mechanische Einwirkungen durch eine Kippbewegung im Nahbereich der Kommissionierperson 2 ebenfalls vermieden sind.

Nachdem alle benötigten Gegenstände aus dem Lagerbehälter 4 in der Bereitstellungsposition entnommen wurden und auf die zugehörigen Auftragsbehälter 5 verteilt wurden, wird der fertige Lagerbehälter 4 in geneigter Lage mittels des Lastaufnahmemittels wieder aus der Bereitstellungsposition auf die erste Förderbahn 6 abgesenkt, wodurch wiederum für die Kommissionierperson 2 die Lärmbelastung und die Verletzungsgefahr deutlich reduziert sind.

Der Abtransport der fertig kommissionierten Auftragsbehälter 5 erfolgt indem diese auf die zweite Förderbahn 7 verbracht werden und mit dieser aus dem Kommissioniersystem 1 abtransportiert werden. Um diese Übergabe der fertigen Auftragsbehälter 5 an die zweite Förderbahn 7 einfach zu gestalten, ist die zweite Förderbahn 7 an die Stellplätze für die zu befüllenden Auftragsbehälter 5 angeschlossen, etwa indem die Stellplätze als Gleitflächen ausgeführt sind, von denen fertige Auftragsbehälter 5 manuell von der Kommissionierperson auf die zweite Förderbahn 7 abgeschoben werden oder es können die Stellplätze selbst als Förderer ausgeführt sein, die die fertigen Auftragsbehälter 5 an die zweite Förderbahn 7 transferieren.

Um die Arbeitsbelastung für die Kommissionierperson gering zu halten, ist die Bereitstellungsposition für Lagerbehälter 4 so positioniert, dass die Öffnung am Lagerbehälter 4, durch welche die Gegenstände entnommen werden, vorzugsweise zwischen Brust und Hüfthöhe angedient wird und die zu befüllenden Auftragsbehälter 5 auf einer Höhe bereitstehen, in der deren Öffnung, durch welche die Gegenstände eingefüllt werden, ebenfalls möglichst zwischen Brust- und Hüfthöhe liegt. Die Stellplätze für die Auftragsbehälter 5 als auch die Bereitstellungsposition können vorzugsweise auch an die Höhe der jeweiligen Behälter 4, 5 angepasst sein, damit für die Kommissionierperson 2 die jeweils maßgebliche Oberkante ergonomisch günstig zwischen Brusthöhe und Hüfthöhe liegt.

In Fig. 1 ist das Zufördern der Lagerbehälter zum Kommissioniersystem 1 durch einen Pfeil 8 an der ersten Förderbahn 6 und das Abfördern der fertig gestellten Auftragsbehälter 5 durch einen Pfeil 9 an der zweiten Förderbahn 7 angedeutet. Das Zufördern von leeren Auftragsbehältern 5 kann manuell oder ebenfalls mit Unterstützung von nicht dargestellten Förderern erfolgen. Ein Zwischenpuffern von leeren Auftragsbehältern 5 kann beispielsweise oberhalb der zu befüllenden Auftragsbehälter erfolgen, in dem für die relativ leichten, leeren Auftragsbehälter 5 eine entsprechende Abstellfläche 10 schräg oberhalb der in Arbeitshöhe angeordneten Auftragsbehälter 5 ausgebildet ist. Nach Abschluss eines Kommissioniervorganges werden abgefertigte und nicht mehr benötigte Lagerbehälter 4 von einem Lastaufnahmemittel in geneigter Lage wieder auf die erste Förderbahn 6 abgesenkt und wieder von dieser übernommen.

In Folge werden diese Lagerbehälter 4 in Richtung des Pfeils 8 auf der ersten Förderbahn 6 weiter zu einer Übergabestation 11 gefördert, an der sie durch einen in strichlierten Linien angedeuteten Übergabeförderer 12 von der ersten Förderbahn 6 übernommen und an die zweite Förderbahn 7 transferiert werden. Diese Übergabe von abgefertigten Lagerbehältern 4 erfolgt in Förderstromrichtung gesehen stromabwärts der Kommissionierstation 3 an der von dieser getrennten Übergabestation 11 und ist durch einen strichlierten Pfeil 13 angedeutet. Der weitere Abtransport der abgefertigten Lagerbehälter 4 erfolgt mittels der zweiten Förderbahn 7, die dadurch sowohl für den Abtransport von fertig gestellten Auftragsbehältern 5 als auch von abgefertigten Lagerbehältern 4 verwendet wird. Dadurch kann auch eine eigene Fördertechnik zum Abtransport abgefertigter Lagerbehälter 4 aus dem Kommissioniersystem 1 eingespart werden.

Das Lastaufnahmemittel, mit dem ein Lagerbehälter von der ersten Förderbahn 6 in die Bereitstellungsposition angehoben und anschließend wieder auf die erste Förderbahn 6 abgesenkt wird kann auch als Teil eines Bereitstellungsförderers angesehen werden, der zumindest das Lastaufnahmemittel, eine Führung, an der das Lastaufnahmemittel geführt ist sowie einen Antrieb für die Verstellbewegung des Lastaufnahmemittels umfasst. Da der Bereitstellungsförderer einen Ausschleusvorgang und einen Einschleusvorgang an der ersten Förderbahn durchführt, kann ein solcher auch als Ein- und Ausschleusförderer angesehen werden.

Bezogen auf die Lagerbehälter 4 ergibt sich damit innerhalb des Kommissioniersystems 1 folgender Verfahrensablauf:
◆ Die Lagerbehälter 4 werden mittels der ersten Förderbahn 6 zur Kommissionierstation 3 angefördert,
◆ in der Kommissionierstation 3 werden Lagerbehälter 4 von der ersten Förderbahn 6 aufgenommen in einer zur Kommissionierperson hin geneigten Lage in die Bereitstellungsposition angehoben,
◆ abgefertigte Lagerbehälter werden in geneigter Lage aus der Bereitstellungsposition wieder auf demselben Weg zur ersten Förderbahn 6 abgesenkt und an diese übergeben,
◆ mittels der ersten Förderbahn 6 werden Lagerbehälter 4 von der Kommissionierstation 3 abgefördert

Zusätzlich können daran folgende Schritte anschließen
◆ die Lagerbehälter werden auf der ersten Förderbahn zu einer von der Kommissionierstation 3 distanziert angeordneten Übergabestation 11 gefördert,
◆ mittels des Übergabeförderers 12 werden Lagerbehälter 4 von der ersten Förderbahn 6 an die zweite Förderbahn 7 transferiert,
◆ mittels der zweiten Förderbahn 7 werden Lagerbehälter 4 wieder aus dem Kommissioniersystem 1 abtransportiert.

Da die zu befüllenden Auftragsbehälter 5 etwa seitlich der Bereitstellungsposition angeordnet sind, ist es von Vorteil, wenn die erste Förderbahn 6 unterhalb der Stellplätze für die Auftragsbehälter 5 angeordnet ist und die Lagerbehälter 4 mittels eines geeigneten Lastaufnahmemittels in die Bereitstellungsposition angehoben werden. Dieses Anheben und Absenken von Lagerbehältern 4 in der Kommissionierstation 3 ist in Fig. 1 mittels eines strichlierten Pfeils 14 erkenntlich gemacht.

Damit auch in dem Zeitraum, der für den Wechsel eines abgefertigten Lagerbehälters 4 in der Bereitstellungsposition gegen einen nächsten Lagerbehälter 4 benötigt wird, die Kommissionierperson die Kommissioniervorgänge fortsetzen kann, ist es von Vorteil, wenn zumindest zwei Bereitstellungspositionen mit jeweils einem unabhängig voneinander arbeitenden Lastaufnahmemittel vorgesehen sind, an denen Lagerbehälter 4 angedient werden können. So kann während aus einem Lagerbehälter 4 kommissioniert wird der zweite abgefertigte Lagerbehälter 4 gegen einen neuen mit benötigten Gegenständen ausgetauscht werden. Dadurch entfallen Rüstzeiten für das Wechseln der Lagerbehälter 4 und die Pickleistung einer Kommissionierperson 2 wird durch Wartezeiten für den Behälterwechsel nicht beeinträchtigt.

Sowohl die Kommissionierstation 3 als auch die Übergabestation 11 sind, wie in Fig. 1 dargestellt, vorzugsweise mit Umhausungen ausgeführt, die insbesondere auch mit schalldämmenden Materialien ausgestattet sein können, damit die von den mechanischen Einwirkungen auf die zu fördernden Lagerbehälter 4 entstehenden Lärmemissionen sich nur in möglichst geringem Ausmaß zur Kommissionierperson 2 ausbreiten können. Im dargestellten Ausführungsbeispiel verbindet der Übergabeförderer 12 stirnseitige Enden der ersten Förderbahn 6 und der zweiten Förderbahn 7, es kann jedoch auch abweichend davon ein derartiger Übergabeförderer 12 auch im Verlauf innerhalb der ersten Förderbahn 6 bzw. der zweiten Förderbahn 7 angeordnet sein, etwa wenn beispielsweise mehrere derartige Kommissioniersysteme hintereinander an einer gemeinsamen, ersten Förderbahn 6 und einer gemeinsamen, zweiten Förderbahn 7 angeordnet sind.

Der von der Kommissionierperson 2 ausgeführte Kommissioniervorgang, bei dem Gegenstände 15 dem bereitgestellten Lagerbehälter 4 entnommen werden und in die bereitgestellten Auftragsbehälter 5 übergeben werden, ist in Fig. 1 durch Pfeile 16 angedeutet. Damit die Arbeitshöhe der Kommissionierperson 2 an die Höhe der Kommissionierstation angepasst ist, kann die Standfläche 17 der Kommissionierperson 2 gegenüber einer Grundfläche 18 beispielsweise durch ein Podest erhöht sein.

Fig. 2 zeigt einen Schnitt durch ein Kommissioniersystem 1 im Bereich der Kommissionierstation 3, aus dem die Höhenverhältnisse der Bauteile zueinander besser ersichtlich sind. Die Schnittdarstellung in Fig. 2 zeigt dabei eine Ausführung des Kommissioniersystems 1, bei dem an einer zentralen, gemeinsamen zweiten Förderbahn 7 vorzugsweise spiegelbildlich eine linke Kommissionierstation 3 und eine rechte Kommissionierstation 3' angeordnet sind, die weiteren Ausführungen betreffen jedoch sowohl einseitige als auch zweiseitige Ausführungen von derartigen Kommissionierstationen 3.

Die zu kommissionierenden Lagerbehälter 4 werden wie bereits anhand von Fig. 1 beschrieben, mittels der ersten Förderbahn 6 der Kommissionierstation 3 auf einer Förderebene 19 zugeführt, die im dargestellten Ausführungsbeispiel mit der Standfläche 17 für die Kommissionierperson 2 zusammenfällt, jedoch selbstverständlich auch davon abweichen kann. Diese Förderebene 19 kann auch als Förderniveau bezeichnet werden, da die Lagerbehälter auf dieser Höhe sowohl zur Kommissionierstation 3 angefördert als auch von dieser abgefördert werden. Weiters kann ein Lagerbehälter 4 auf der Förderebene 19 als in Förderposition 21 oder Übergabeposition bezeichnet werden.

Zum Anheben eines Lagerbehälters 4 von Förderebene 19 wird ein in einem ersten Niveau 20 unterhalb der Förderebene 19 positioniertes Lastaufnahmemittel 22 beispielsweise in Form einer Hubgabel 23 vom ersten Niveau 20 ausgehend angehoben und der Lagerbehälter 4 am Ende dieser Hubbewegung in einem zweiten Niveau 24 der Kommissionierperson 2 in einer Bereitstellungsposition 25 angedient.

Das zweite Niveau 24 bzw. die Bereitstellungsposition 25 ist dabei so gewählt, dass die Öffnung zum Entnehmen von Gegenständen 15, die beispielsweise durch die Oberkante des Lagerbehälters 4 gebildet ist, sich für die Kommissionierperson 2 ergonomisch günstig im Bereich zwischen Hüfthöhe und Schulterhöhe befindet, wodurch ein leichtes Entnehmen von Gegenständen 15 mit möglichst geringen Körperbewegungen gegeben ist.

Um die Entnahme von Gegenständen 15 weiter zu erleichtern, ist in der Bereitstellungsposition 25 der Lagerbehälter 4 um einen Winkel 26 in Richtung zur Kommissionierperson 2 hin geneigt, wodurch zusätzlich auch die optische Erfassung von enthaltenen Gegenständen 15 erleichtert wird. Damit die Kommissionierperson 2 durch den dazu erforderlichen Kippvorgang möglichst geringen zusätzlichen Lärmbelastungen und auch keinen zusätzlichen Verletzungsgefahren ausgesetzt wird, erfolgt dieses Kippen nicht im Nahbereich der Kommissionierperson 2 sondern bereits beim Aufnehmen eines Lagerbehälters 4 in der Förderposition 21 durch das Lastaufnahmemittel 22 und wird der Lagerbehälter 4 in bereits geneigter Lage vom ersten Niveau 20 bzw. der Förderebene 19 auf das zweite Niveau 24 angehoben.

Der Winkel 26 für die schräge Andienung eines Lagerbehälters 4 beträgt im dargestellten Ausführungsbeispiel ca. 15°, kann jedoch aus einem Bereich zwischen 5° und 30° gewählt sein. Die Wahl des Winkels 26 kann auch davon abhängig sein, welche Gegenstände zu kommissionieren sind und dass eine ausreichende Sicherheit gegen Abrutschen des schräg angedienten Lagerbehälters 4 vom Lastaufnahmemittel 22 gegeben ist.

Beim Bereitstellen eines Lagerbehälters 4 in der Kommissionierstation 3 wird dieser durch eine oder mehrere Aufnahmeflächen 27 am Lastaufnahmemittel 22 in schräger Lage gestützt. Bei einem Lastaufnahmemittel 22 in Form einer Hubgabel 23 sind die Aufnahmeflächen 27 beispielsweise durch die Oberseiten der Zinken der Hubgabel 23 gebildet.

Im ersten Niveau 20 befindet sich die Aufnahmefläche 27 des Lastaufnahmemittels 22 unterhalb der Förderebene 19 bzw. der Förderposition 21 und wird ein Lagerbehälter 4 von der ersten Förderbahn 6 in die Kommissionierstation 3 gefördert, wenn die Aufnahmefläche 27 am Lastaufnahmemittel 22 unterhalb der Förderebene 19 bereitsteht.

Durch eine Ausführung des Lastaufnahmemittels 22 in Form einer Hubgabel 23 kann diese bei einer ersten Förderbahn 6 in Form eines Rollenförderers einfach zwischen den Förderrollen abgesenkt werden, wodurch die Aufnahmefläche 27 unter die Förderebene 19 verbracht werden kann und ein Lagerbehälter 4 in die Kommissionierstation 3 eingefahren werden kann Die Hubgabel 23 umfasst dabei zinken-ähnliche Aufnahmeelemente.

Anschließend erfolgt die Verstellung des Lastaufnahmemittels 22 in das zweite Niveau 24 in Form einer Hubbewegung, wobei das Lastaufnahmemittel 22 an einer Führung 28 translatorisch, also mit gleich bleibender Neigung des Lagerbehälters 4, geführt ist. Die Führung 28 ist im einfachsten Fall durch eine Linearführung 29 gebildet, die Führungsflächen aufweist, an denen das Lastaufnahmemittel 22 mittels geeigneten Führungselementen, beispielsweise Führungsrollen, geradlinig geführt ist. Das Lastaufnahmemittel 22 ist mit einem Verstellantrieb 30 verbunden, der im dargestellten Ausführungsbeispiel einen Antriebsmotor 31 umfasst, welcher beispielsweise über ein Zahnriementrieb 32 mit dem Lastaufnahmemittel 22 verbunden ist.

Im dargestellten Ausführungsbeispiel ist die Linearführung 29 um einen Winkel 33 gegenüber einer Vertikalen in Richtung zur Kommissionierperson 2 hin geneigt, wodurch bei der Bereitstellungsbewegung des Lagerbehälters 4 von der Förderposition 21 in die Bereitstellungsposition 25 sowohl eine Bewegung in vertikaler Richtung als auch in horizontaler Richtung bewirkt wird, und dadurch eine größere Fußfreiheit für die Kommissionierperson 2 möglich ist, als bei einer rein vertikalen Verstellung, bei der die erste Förderbahn 6 näher an den Füßen der Kommissionierperson 2 angeordnet sein müsste. Der Winkel 33 beträgt im dargestellten Ausführungsbeispiel ca. 15°, und entspricht damit dem Winkel 26 für die Schrägstellung der Lagerbehälter 4 während der Bereitstellung für das Kommissionieren. Grundsätzlich ist jedoch der Winkel 33 der Linearführung 29 gegenüber einer Vertikalen unabhängig von dem Winkel 26 der Behälterneigung. Durch die gleich große Ausführung der Winkel 26 und 33 kann jedoch das Lastaufnahmemittel 22 in Form der Hubgabel 23 rechtwinkelig zur Führung ausgebildet sein und dadurch auf vorhandene Hubförderer zurückgegriffen werden.

Der Verstellantrieb 30 für das Lastaufnahmemittel 22 ist an eine Steuerungsvorrichtung 34 der Kommissionierstation 3 angeschlossen bzw. mit dieser verbunden und kann diese insbesondere zur optimalen Anpassung der Bereitstellungsposition 25 an eine Kommissionierperson 2 dem Verstellantrieb 30 einen Wert für das zweite Niveau 24 vorgeben, wobei dieser Wert beispielsweise in Abhängigkeit von der Höhe 35 des zu kommissionierenden Lagerbehälters 4 berechnet wird und dadurch auch bei einer Abfolge von Lagerbehältern 4 mit unterschiedlichen Höhen 35 deren Oberkante trotzdem immer auf dieselbe Bereitstellungsposition 25 angehoben wird. Alternativ dazu wäre es auch denkbar, dass jeweils die Behälterunterseite auf dasselbe Niveau angehoben wird.

Da an einer derartigen Kommissionierstation 3 auch Kommissionierpersonen mit unterschiedlichen Körpergrößen tätig sein können, kann die Steuervorrichtung 34 weiters dazu verwendet werden, den Wert für das zweite Niveau in der Bereitstellungsposition 25 mit einer Körperabmessung 36 beispielsweise der Schulterhöhe 37 zu verknüpfen. So könnte beispielsweise mit Hilfe einer mit der Steuerungsvorrichtung 34 verbundenen Messeinrichtung, beispielsweise in Form einer Videokamera, eine Körperabmessung 36 vermessen werden und basierend darauf ein optimaler Wert für den Verstellantrieb 30 errechnet werden wodurch die Bereitstellungsposition 25 für die Kommissionierperson optimal angepasst werden kann.

Alternativ wäre es auch möglich, dass für verschiedene Kommissionierpersonen 2 jeweils optimale Werte oder persönliche Präferenzen in der Steuerungsvorrichtung 34 hinterlegt sind, die nach Eingabe der Identität der aktuell tätigen Kommissionierperson 2 abgerufen werden.

Selbstverständlich kann die Steuerungsvorrichtung 34 auch gleichzeitig die Höhe 35 der Lagerbehälter 34 und die jeweilige Körperabmessung 36 oder einen hinterlegten Wert gemeinsam zur Ermittlung des optimalen zweiten Niveaus 24 heranziehen.

Damit für die Kommissionierperson 2 die Verletzungsgefahr beim Arbeiten an der Kommissionierstation 3 weiter reduziert ist, ist der Bewegungsraum, der für die Bewegung des Lastaufnahmemittels 22 und eines darauf geförderten Lagerbehälters 4 erforderlich ist, in Richtung zur Kommissionierperson 2 mittels einer Schachtwand 38 begrenzt. Diese reduziert die Gefahr, dass Körperteile der Kommissionierperson 2 in die Bewegungsbahn der an der Kommissionierstation 3 bereitgestellten Lagerbehälter 4 geraten und der Gefahr von Stößen ausgesetzt sind.

Die Bewegungsbahn zum Anheben und Absenken der Lagerbehälter 4 kann darüber hinaus auch zumindest im oberen Bereich seitlich von zusätzlichen Schachtwände 39 umgeben sein, wodurch quasi ein Schacht für die Hubbewegung eines Lagerbehälters 4 gebildet ist. Die seitlichen Schachtwände 39 sowie die vordere Schachtwand 38 können dazu insbesondere parallel zur Linearführung 29 verlaufen, wodurch ein konstanter Querschnitt des Schachtes gegeben ist, und ein derart gebildeter Schacht eine zusätzliche Sicherheit vor einem möglichen Abrutschen eines Behälters 4 von den schrägen Aufnahmeflächen 27 des Lastaufnahmemittels 22 gegeben ist.

Im normalen Kommissionierbetrieb kann das zweite Niveau 24 so festgelegt sein, dass dieses keinesfalls oberhalb der Oberkante 40 der vorderen Schachtwand 38 zu liegen kommt, d.h. die Unterkante eines Lagerbehälters 4 wird nicht so weit angehoben, dass sie oberhalb der Schachtwände 38, 39 zu liegen kommt. Dadurch ist im normalen Kommissionierbetrieb ein Einquetschen von Körperteilen der Kommissionierperson 2 beim Absenken eines Lagerbehälters 4 aus der Bereitstellungsposition 25 vermieden.

Darüber hinaus ist es auch möglich, dass der Schacht vier Schachtwände aufweist und der Lagerbehälter 4 bei der Bewegung zwischen dem ersten Niveau 20 und zweiten Niveau 24 von den Schachtwänden auf vier Seiten umgeben ist.

Fig. 2 zeigt weiters die zweite Förderbahn 7, die in diesem Ausführungsbeispiel ebenso wie die erste Förderbahn 6 als Rollenförderer 41 ausgebildet ist und dessen Rollen jeweils die Förderebenen definieren. Im Ausführungsbeispiel gemäß Fig. 2 ist die Förderebene 42 der zweiten Förderbahn 7 in Form des Rollenförderers 41 auf einem höheren Niveau als die Förderebene 20 der ersten Förderbahn 6. Die Förderebene 42 ist vorteilhaft so gewählt, dass fertig kommissionierte Auftragsbehälter 5 im Wesentlichen in horizontaler Richtung von ihren Stellplätzen auf die zweite Förderbahn 7 verbracht werden können, wodurch eine Fördertechnik zum Transfer der fertiggestellten Auftragsbehälter 5 auf die zweite Förderbahn 7 entfallen kann oder zumindest baulich einfach gehalten werden kann.

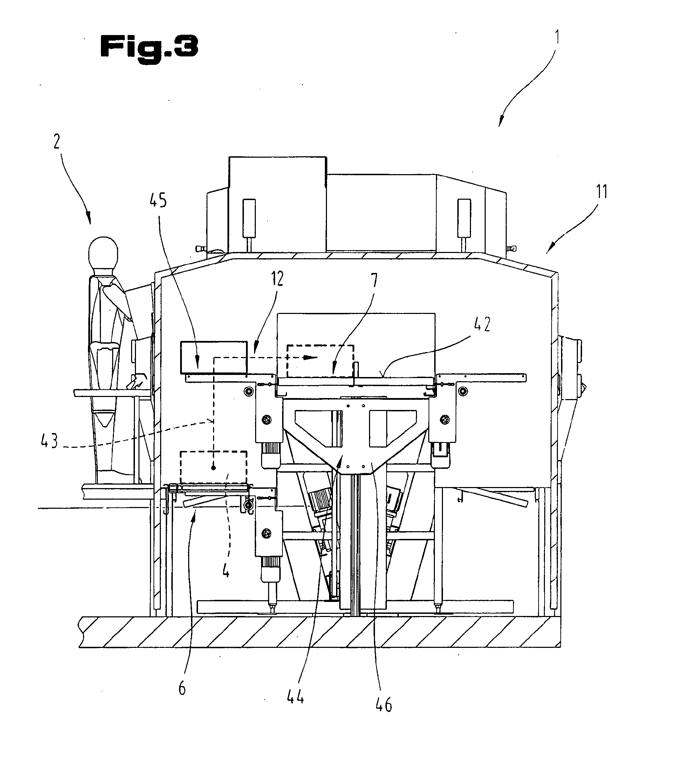

Fig. 3 zeigt einen weiteren Schnitt durch ein Kommissioniersystem 1 im Bereich der Übergabestation 11.

Die Übergabestation 11 verbindet, wie bereits anhand von Fig. 1 beschrieben, die erste Förderbahn 6 mit der zweiten Förderbahn 7 und umfasst einen Übergabeförderer 12, der abgefertigte Lagerbehälter 4 von der ersten Förderbahn 6 aufnimmt und an die zweite Förderbahn 7 abgibt. Wie mit dem strichlierten Pfeil 43 angedeutet ist, umfasst diese Übergabe eine Hubbewegung, in der ein Lagerbehälter 4 im Wesentlichen in vertikaler Richtung mit einem Lastaufnahmemittel 44 von der ersten Förderbahn 6 übernommen und vertikal nach oben angehoben wird und eine anschließende horizontale Bewegung, in der der angehobene Lagerbehälter 4 in horizontaler Richtung auf die zweite Förderbahn 7 transferiert wird. Das Lastaufnahmemittel 44 kann dazu wiederum in Form einer Hubgabel ausgebildet sein, und zusätzlich zum Horizontaltransfer eines Lagerbehälters 4 mit auf den Hubgabeln angeordneten Förderer 45 versehen sein.

Die Fig. 3 zeigt eine Ausführungsform des Übergabeförderers 12, bei dem an einer gemeinsamen Hubeinheit 46 zumindest ein Lastaufnahmemittel 44 zum Übernehmen von Lagerbehältern 4, von einer oder von zwei bezüglich der gemeinsamen zweiten Förderbahn 7 spiegelbildlich angeordneten ersten Förderbahnen 6 vorgesehen sind.

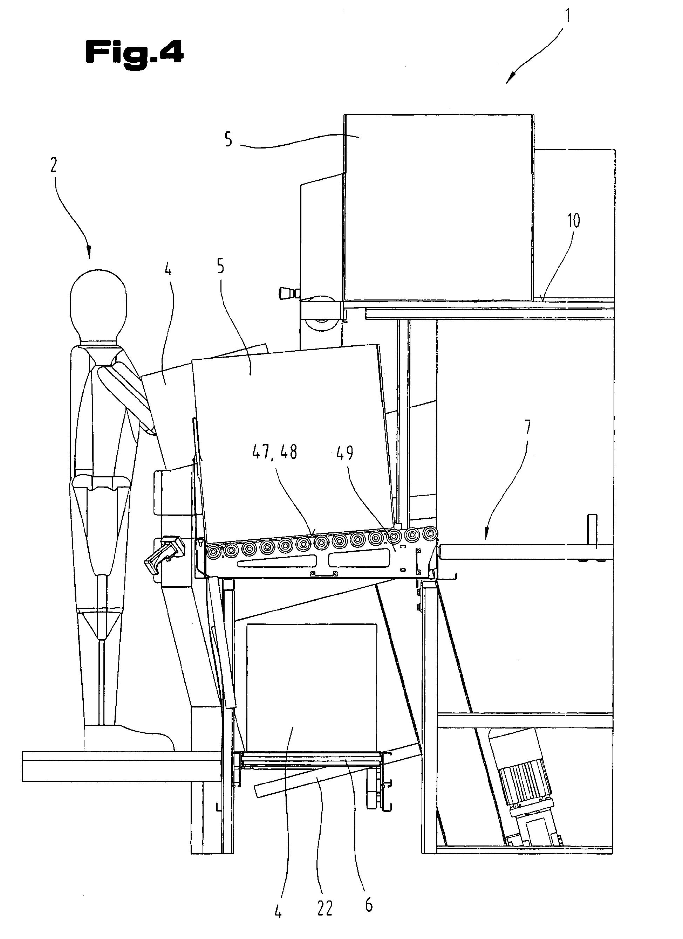

Fig. 4 zeigt eine Schnittdarstellung durch ein Kommissioniersystem 1 im Bereich der für die Kommissioniervorgänge bereitstehenden Auftragsbehälter 5, die, wie in Fig. 1 dargestellt, vorzugsweise links und rechts der Bereitstellungsposition 25 bereitstehen. Für die Auftragsbehälter 5 sind dazu Stellplätze 47 vorgesehen, die im Ausführungsbeispiel gemäß Fig. 4 zur Kommissionierperson 2 hin geneigte Stützebenen 48 aufweisen. Die Stützebenen 48 können durch einfache Gleitflächen gebildet sein, auf denen die zum Kommissionieren vorgesehenen Auftragsbehälter 5 abgestellt werden und nach Abschluss eines Kommissioniervorganges von der Kommissionierperson 2 auf die zweite Förderbahn 7 geschoben werden. Im Fall von schweren Auftragsbehältern 5, beispielsweise in Form von Paletten, können die Stellplätze 47 als manuell oder motorisch antreibbare Förderer 49 ausgebildet sein bzw. durch solche an die zweite Förderbahn 7 angeschlossen sein.

Fig. 4 zeigt weiters zusätzliche, leere Auftragsbehälter 5, die schräg oberhalb der Stellplätze 47 auf der Abstellfläche 10 bereitgehalten werden.

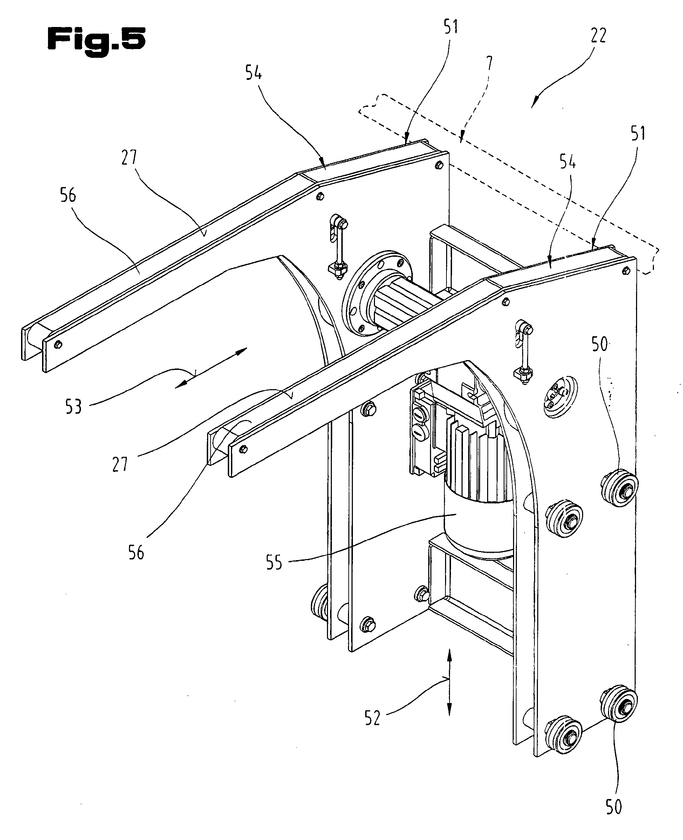

Fig. 5 zeigt eine alternative Ausführungsform eines Lastaufnahmemittels 22, wie es für eine Kommissionierstation 3 oder aber auch für andere Anwendungen zum Einsatz kommen kann. Das etwa L-förmige Lastaufnahmemittel 22 umfasst an einem Schenkel Führungselemente, beispielsweise in Form von Führungsrollen, mit denen das Lastaufnahmemittel 22 an einer nicht dargestellten Führung verstellbar gelagert ist und weist auf dem für das Aufnehmen von Behältern vorgesehenen zweiten Schenkel zusätzlich eine automatisierte Fördervorrichtung 51 auf, welche eine Auflagefläche 27 für Lagerbehälter 4 oder sonstige Behälter bzw. Fördereinheiten ausbildet und mit der beispielsweise ein Lagerbehälter 4 zwischen dem Lastaufnahmemittel 22 und einer strichliert dargestellten zweiten Förderbahn 7 transportierbar ist. Die Aufnahmefläche 27 kann dabei, wie in Fig. 5 dargestellt und anhand von Fig. 2 beschrieben zur Kommissionierperson 2 hin geneigt sein, es kann jedoch die Auflagefläche 27 auch horizontal ausgeführt sein oder sogar von der Kommissionierperson 2 weg geneigt, insbesondere für den Fall, dass das Kommissioniersystem 1 für kleine Lagerbehälter 4 eingesetzt wird, bei denen eine Bereitstellung von Lagerbehältern 4 in geneigter Lage ergonomisch nicht erforderlich ist.

In Fig. 5 ist die Verstellrichtung 52 des Lastaufnahmemittels 22 mit einem Doppelpfeil dargestellt und die durch die automatisierte Fördervorrichtung 51 bewirkte zusätzlich mögliche Förderrichtung 53 ebenfalls durch einen Doppelpfeil dargestellt. Im dargestellten Ausführungsbeispiel ist die Fördervorrichtung 51 in Form von Riemenförderern 54 ausgebildet, wobei die Oberseite der Förderriemen die Aufnahmefläche 27 bildet. Der Antriebsmotor 55 wird selbstverständlich ebenfalls von einer Steuerungsvorrichtung 34 angesteuert und der Verstellantrieb für das Lastaufnahmemittel 22 in Fig. 5 entspricht im Wesentlichen jenem, der bereits anhand von Fig. 2 beschrieben wurde.

Die Fördervorrichtung 51 umfasst zumindest ein Förderorgan 56, hier in Form von Riemen, mit dem ein am Lastaufnahmemittel 22 aufgenommener Lagerbehälter 4 in einer von der Verstellrichtung 52 des Lastaufnahmemittels 22 verschiedenen Förderrichtung 53 bewegbar ist. Ein derartiges Lastaufnahmemittel 22 ermöglicht es, sowohl in der abgesenkten als auch in der angehobenen Stellung Behälter oder sonstige Fördereinheiten quer zur Hubrichtung von benachbarten Förderbahnen zu übernehmen oder an diese zu übergeben, wodurch ein derartiges Lastaufnahmemittel sehr flexibel einsetzbar ist.

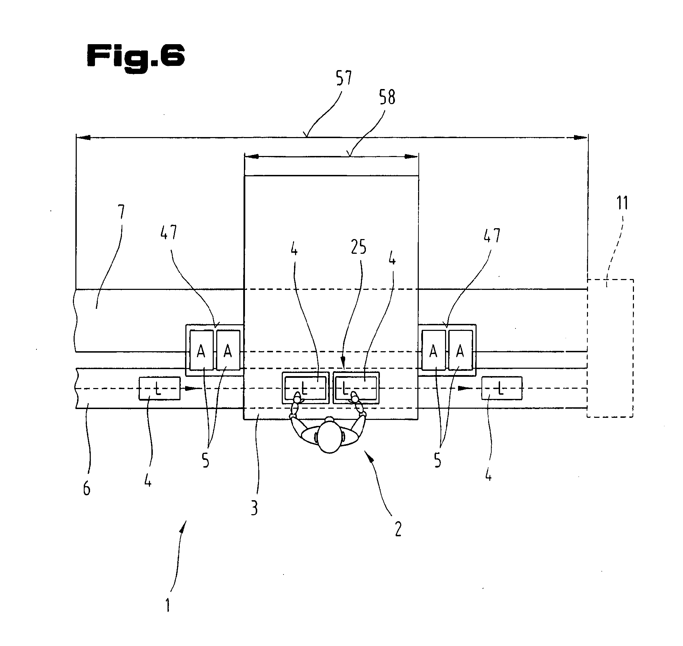

Fig. 6 zeigt noch eine stark vereinfachte Skizze eines Kommissioniersystems 1 mit einer Kommissionierstation 3 an der eine Kommissionierperson 2 aus einem in einer Bereitstellungsposition 25 angedienten Lagerbehälter 4 Gegenstände gemäß vorliegenden Kommissionieraufträgen entnimmt und in auf Stellplätzen 47 bereitgestellte Auftragsbehälter 5 transferiert. In der Kommissionierstation 3 ist ein in dieser Figur nicht dargestelltes Lastaufnahmemittel 22 (siehe Fig. 2) umfasst, das auf einem ersten Niveau einen Lagerbehälter 4 von der ersten Förderbahn 6 übernimmt und auf dem zweiten Niveau in einer Bereitstellungsposition 25 für die Kommissionierperson 2 andient.

Das Lastaufnahmemittel 22 führt oder stützt zwischen dem ersten Niveau 19 und dem zweiten Niveau 24 den Lagerbehälter 4 mit einer Aufnahmefläche. Wenn das Lastaufnahmemittel 22 auf das untere erste Niveau 19 verstellt ist befindet sich die Aufnahmefläche unterhalb einer Förderebene 20 der ersten Förderbahn 6 und kann in dieser Stellung ein Lagerbehälter über das Lastaufnahmemittel positioniert werden. Alternativ dazu kann ein geeignetes Lastaufnahmemittel auch in einer horizontalen Bewegung den in Förderposition bereitstehenden Lagerbehälter 4 unterfahren und anschließend anheben.

Mit der ersten Förderbahn 6 erfolgt zumindest der Antransport der zu kommissionierenden Lagerbehälter 4 und mit einer zweiten Förderbahn 7 werden zumindest fertig gestellte Auftragsbehälter 5 von der Kommissionierstation 3 abgefördert. Eine vorteilhafte Ausführungsform eines Kommissioniersystems 1 ist dadurch gegeben, dass sich wie in Fig. 6 dargestellt sowohl die erste Förderbahn 6 als auch die zweite Förderbahn 7 durch die Kommissionierstation 3 hindurch erstreckt. Dabei ist die Länge 57 der ersten Förderbahn 6 und der zweiten Förderbahn 7 größer als die doppelte Länge 58 der Kommissionierstation 3 in Förderrichtung. Es ist weiters jedoch auch möglich, dass nur die erste Förderbahn 6 oder die zweite Förderbahn 7 eine Länge 57 aufweist, die zumindest dem doppelten der Länge 58 der Kommissionierstation 3 entspricht.

In Fig. 6 dient der bezogen auf die Kommissionierstation 3 links angeordnete erste Förderabschnitt der ersten Förderbahn 6 dem Antransport der Lagerbehälter 4 und der bezogen auf die Kommissionierstation 3 rechte Abschnitt der ersten Förderbahn 6 dem Abtransport der Lagerbehälter 4 von der Kommissionierstation 3. Dies bedeutet eine erhebliche Reduzierung der Baugröße eines derartigen Kommissioniersystems 1 gegenüber aus dem Stand der Technik bekannten Kommissioniersystemen, bei denen zum Antransport der Lagerbehälter 4 und zum Abtransport der Lagerbehälter 4 getrennte Förderbahnen mit distanzierten Positionen für das Aufnehmen von Lagerbehältern 4 mit einem Lastaufnahmemittel und das nachfolgende Abgeben von einem Lastaufnahmemittel vorgesehen sind.

Vorzugsweise werden der erste Förderabschnitt, in Fig. 6 der linke Ast der ersten Förderbahn 6, und der zweite Förderabschnitt, in Fig. 6 der rechte Ast der ersten Förderbahn 6, mit gleicher Förderrichtung der Lagerbehälter 4 betrieben, wobei der Förderfluss der Lagerbehälter 4 jedoch auch bei Bedarf geändert werden kann.

Entsprechend der Länge der ersten Förderbahn 6 und/oder der zweiten Förderbahn 7 kann dadurch die Anzahl der in Förderrichtung der Lagerbehälter 4 hintereinander angeordneten Kommissionierstationen 3 variiert werden. An einer ersten Förderbahn 6 entsprechender Länge können dadurch entlang dieser mehrere Kommissionierstationen 3 angeordnet werden. Bei einer derartigen seriellen Anordnung von Kommissioniersystemen ist es von Vorteil, wenn an oder zwischen den einzelnen Kommissionierstationen 3 Möglichkeiten geschaffen sind, einzelne bei nachfolgenden Kommissionierstationen 3 dringend benötigte Lagerbehälter 4 an bereits im Kommissioniersystem 1 befindlichen Lagerbehältern 4 vorbeischleusen zu können. Dies kann so realisiert sein, dass die erste Förderbahn 6 alle seriell angeordneten Kommissionierstationen 3 durchläuft und an den einzelnen Kommissionierstationen 3 Ausschleusvorrichtungen und Pufferstationen für die an dieser speziellen Kommissionierstation 3 zu bearbeitenden Lagerbehälter 4 vorgesehen sind.

Bei einer parallelen Anordnung von zwei erfindungsgemäßen Kommissioniersystemen 1 ist es weiters möglich, dass von einer Kommissionierperson 2 zwei einander zugewandte und gegenüberliegende Kommissionierstationen 3 im Wechsel bedient werden, was bei einem geringeren Anfall von Kommissionieraufträgen möglich ist.

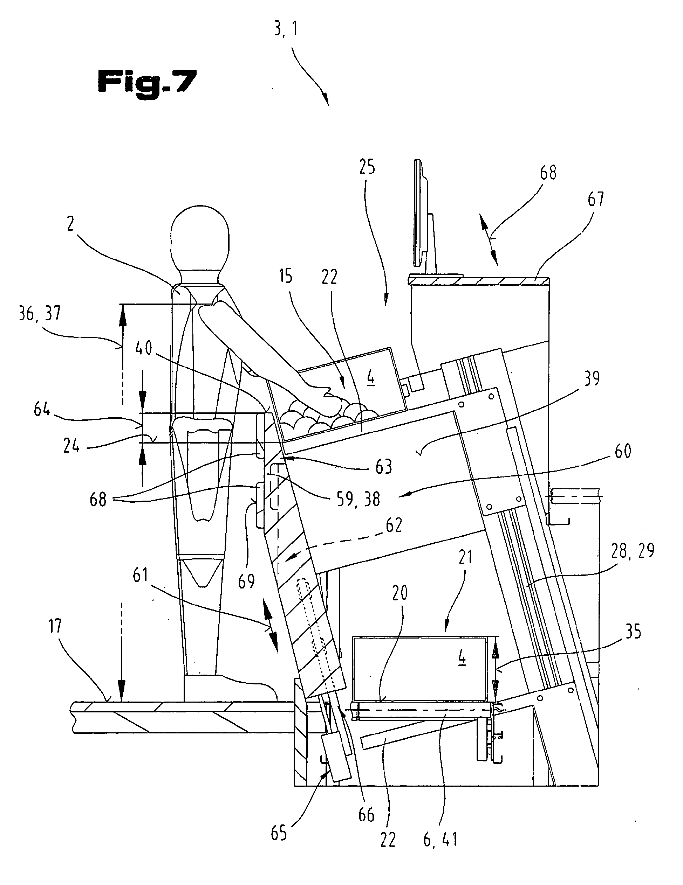

Fig. 7 zeigt einen Schnitt durch eine Kommissionierstation 3, die Bestandteil eines Kommissioniersystems 1 ist und an der eine Kommissionierperson 2 gemäß vorliegenden Kommissionieraufträgen aus Lagerbehältern 4 Gegenstände 15 entnimmt und auf in Fig. 7 nicht dargestellte Auftragsbehälter 5 verteilt. Die Lagerbehälter 4 werden dazu mittels einer ersten Förderbahn 6, hier in Form eines Rollenförderers 41, zur Kommissionierstation 3 gefördert und aus einer Förderposition 21 von einem ersten Niveau 20 mittels eines Lastaufnahmemittels 22 übernommen und in eine Bereitstellungsposition 25 auf einem zweiten Niveau 24 angehoben.

Dieses zweite Niveau 24 ist dabei vorteilhafterweise so festgelegt, dass für eine Kommissionierperson 2 mit einer bestimmten Körperabmessung 36, beispielsweise der Schulterhöhe 37, eine ergonomisch günstige Andienung der Lagerbehälter 4 in der Bereitstellungsposition 25 gegeben ist. Insbesondere kann ein Lagerbehälter 4, wie anhand der Ausführung gemäß Fig. 2 beschrieben, in einer zur Kommissionierperson 2 hin geneigten Lage in die Bereitstellungsposition 25 auf das zweite Niveau 24 verstellt werden. Das zweite Niveau 24 ist im Allgemeinen so gewählt, dass dieses zwischen Hüfthöhe und Brusthöhe der Kommissionierperson 2 liegt, wobei durch unterschiedliche Höhen 35 der Lagerbehälter 4 sich der optimale Wert für das zweite Niveau 24 verändern kann.

Die Verstellung des Lastaufnahmemittels 22 zwischen dem ersten Niveau 20 und dem zweiten Niveau 24 erfolgt, indem dieses an einer Führung 28, beispielsweise in Form einer Linearführung 29 geführt ist und mit einem in Fig. 7 nicht dargestellten Verstellantrieb 30 (siehe Fig. 2) verbunden ist.

Zwischen dem Bewegungsraum, den das Lastaufnahmemittel 22 und ein gegebenenfalls darauf positionierter Lagerbehälter 4 bei der Hub- und Absenkbewegung zwischen dem ersten Niveau 20 und dem zweiten Niveau 24 überstreicht und der Kommissionierperson 2 ist auf der, der Kommissionierperson 2 zugewandten Seite der Kommissionierstation 3 ein Wandelement 59 angeordnet, das verhindert, dass Körperteile der Kommissionierperson 2 in diesen Bewegungsraum ragen können und dadurch der Gefahr von Stößen oder ähnlichem ausgesetzt sind.

Dieser Wandteil 59 kann auch Teil eines Schachtes 60 sein, durch den ein Lagerbehälter 4 mittels des Lastaufnahmemittels 22 zwischen dem ersten Niveau 20 und dem zweiten Niveau 24 hindurchbewegt wird und somit der anhand von Fig. 2 beschriebenen, vorderen Schachtwand 38 entsprechen. Dieser Schacht 60 bietet durch seine vordere Schachtwand 38, hier in Form des Wandteils 59 einen Schutz vor Verletzungen der Kommissionierperson 2 als auch zusammen mit seitlichen Schachtwänden 39 gewissermaßen eine Führung für anzuhebende und abzusenkende Lagerbehälter 4.

In der in Fig. 7 dargestellten Kommissionierstation 3 ist der Wandteil 59 höhenverstellbar ausgeführt, wobei diese Verstellmöglichkeit durch Pfeil 61 angedeutet ist. Der Wandteil 59 kann dadurch ausgehend von einer strichliert angedeuteten Grundposition 62 in eine mit Volllinien dargestellte Arbeitsposition 63 angehoben werden. Durch diese Höhenverstellbarkeit, kann auch die Oberkante 40 des Wandteils 59 seine Höhenposition verändern, wobei diese vorteilhafterweise im normalen Kommissionierbetrieb immer so gewählt ist, dass diese zumindest auf dem zweiten Niveau 24 liegt oder um einen Höhenbetrag 64 darüber positioniert ist. Dadurch ist sichergestellt, dass die Oberkante 40 im normalen Kommissionierbetrieb immer oberhalb der Unterkante eines in der Bereitstellungsposition 25 befindlichen Lagerbehälters 4 gelegen ist und dadurch zwischen dem Wandteil 59 und dem Lagerbehälter 4 keine Quetschstelle entstehen kann.

Der Höhenbetrag 64 kann beispielsweise ein fixer Betrag von mehreren Zentimetern sein oder aber auch in Abhängigkeit von der Behälterhöhe 35 und/oder einer Körperabmessung 36 der Kommissionierperson 2 festgelegt werden. So kann etwa die Oberkante 40 jeweils auch so positioniert sein, dass sie immer knapp unterhalb der Oberkante eines Lagerbehälters 4 in der Bereitstellungsposition 25 positioniert ist.

Die Höhenverstellung des Wandteils 59 kann manuell durch die Kommissionierperson 2 erfolgen, von Vorteil ist jedoch wenn der Wandteil 59 mit einem automatisierten Verstellantrieb 65, etwa mit einem Servomotor, gekoppelt oder verbunden ist, der insbesondere auch von einer in Fig. 7 nicht dargestellten Steuervorrichtung 34 angesteuert ist.

Die Verstellbewegung des Wandteils 59 ist durch eine Führung 66, beispielsweise einer Linearführung, festgelegt, wobei diese vorteilhafterweise etwa parallel verlaufend zur Führung 28 des Lastaufnahmemittels 22 angeordnet ist, wodurch bei der Verstellung des Lagerbehälters 4 zwischen ersten Niveau 20 und zweiten Niveau 24 und dem Wandteil 59, der auch die vordere Schachtwand 38 bilden kann, ein konstanter Abstand gegeben ist.

Der Schacht 60 kann so ausgebildet sein, dass nur die vordere Schachtwand 38 in Form des Wandteils 59 höhenverstellbar ist, es ist jedoch auch möglich, dass die seitlichen Schachtwände 39 des Schachtes 60 ebenfalls zusammen mit dem Wandelement 59 höhenverstellbar sind.

Der Verstellantrieb 65 ist vorteilhafterweise mechanisch unabhängig von dem Verstellantrieb 30 für das Lastaufnahmemittel 22, wodurch der Wandteil 59 rechtzeitig in die richtige Höhenposition verstellt werden kann, bevor mit dem Lastaufnahmemittel 22 ein Lagerbehälter 4 auf das zweite Niveau 24 in die Bereitstellungsposition 25 angehoben wird.

Eine weitere Möglichkeit die Kommissionierstation 3 an eine Kommissionierperson ergonomisch optimal anpassbar zu machen, besteht darin, dass die Kommissionierstation 3 ferner eine verstellbare Ablage 67 umfasst, wobei deren Höhenverstellbarkeit durch einen Pfeil 68 angedeutet ist. Die Ablage 67 kann beispielsweise zur Anordnung von Benutzerschnittstellen, Druckern, Monitoren oder ähnlichem vorgesehen sein und kann durch die Höhenverstellbarkeit auch optimal an Körperabmessungen 36 der Kommissionierperson 2 angepasst werden.

Dabei ist es möglich, dass die Ablage 67 zusammen mit dem Wandteil 59 verstellt wird und mit diesem beispielsweise über die seitlichen Schachtwände 39 verbunden ist, wodurch ein eigener Verstellantrieb für die Ablage 67 entfallen kann.

In Fig. 7 ist für die Verstellbarkeit des Wandteils 59 und der Ablage 67 eine zur Kommissionierperson 2 hin geneigte Verstellrichtung dargestellt, es kann jedoch auch eine etwa vertikale Verstellbarkeit eines dieser oder beider Elemente realisiert sein. Zusätzlich oder alternativ kann die Ablage 67 mittels einer geeigneten Führung auch in horizontaler Richtung verstellbar sein.

Eine weitere Arbeitserleichterung für die Kommissionierperson 2 kann dadurch erzielt werden, dass der Wandteil 59 zumindest ein flächiges Stützelement 68 zum Abstützen der Kommissionierperson 2 während des Kommissioniervorganges umfasst, an dem sich diese anlehnen kann, falls sie sich über die Bereitstellungsposition 25 oder in Richtung zur Ablage 67 vorbeugen muss. Dies kann insbesondere notwendig sein, wenn die Lagerbehälter 4 größere Abmessungen besitzen. Durch die flächige Ausführung der Stützelemente 68 sind schmerzhafte Druckstellen für die Kommissionierperson 2 beim Anlehnen vermieden, wobei die Stützelemente 68 vorzugsweise etwa vertikale Stützflächen 69 aufweisen. Die Stützelemente 68 können insbesondere aus nicht-metallischen Werkstoffen wie Holz oder Kunststoff gebildet sein, wodurch die Kommissionierperson 2 beim Anlehnen kein Kältegefühl wie beim Berühren von Metall empfindet.

Auf für die Erfindung nicht wesentliche Details und Bauelemente wie z.B. Gestelle oder Verbindungselemente zwischen den einzelnen beschriebenen Bauelementen wird in dieser Anmeldung nicht näher eingegangen, da diese im Können des Durchschnittsfachmannes liegen.

Die Ausführungsbeispiele zeigen mögliche Ausführungsvarianten einer Kommissionierstation bzw. eines Kommissioniersystems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In den Figuren sind zum Teil verschiedene und gegebenenfalls für sich eigenständige Ausführungsformen der Erfindung oder von Bestandteilen der Erfindung gezeigt, wobei für gleiche Teile jeweils gleiche Bezugszeichen bzw. Bauteilbezeichnungen verwendet werden. Um unnötige Wiederholungen zu vermeiden, wurde auf mehrfache detaillierte Beschreibungen verzichtet.

Der Ordnung halber sei abschließend darauf hingewiesen, dass zum besseren Verständnis des Aufbaus des Kommissioniersystems dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4; 5; 6; 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Kommissioniersystem | 41 | Rollenförderer |
| 2 | Kommissionierperson | 42 | Förderebene |
| 3 | Kommissionierstation | 43 | Pfeil |
| 4 | Lagerbehälter | 44 | Lastaufnahmemittel |
| 5 | Auftragsbehälter | 45 | Förderer |
| | | | |
| 6 | erste Förderbahn | 46 | Hubeinheit |
| 7 | zweite Förderbahn | 47 | Stellplatz |
| 8 | Pfeil | 48 | Stützebene |
| 9 | Pfeil | 49 | Förderer |
| 10 | Abstellfläche | 50 | Führungselement |
| | | | |
| 11 | Übergabestation | 51 | Fördervorrichtung |
| 12 | Übergabeförderer | 52 | Verstellrichtung |
| 13 | Pfeil | 53 | Förderrichtung |
| 14 | Pfeil | 54 | Riemenförderer |
| 15 | Gegenstand | 55 | Antriebsmotor |
| | | | |
| 16 | Pfeil | 56 | Förderorgan |
| 17 | Standfläche | 57 | Länge |
| 18 | Grundfläche | 58 | Länge |
| 19 | erstes Niveau | 59 | Wandteil |
| 20 | Förderebene | 60 | Schacht |
| | | | |
| 21 | Förderposition | 61 | Pfeil |
| 22 | Lastaufnahmittel | 62 | Grundposition |
| 23 | Hubgabel | 63 | Arbeitsposition |
| 24 | zweites Niveau | 64 | Höhenbetrag |
| 25 | Bereitstellungsposition | 65 | Verstellantrieb |
| | | | |
| 26 | Winkel | 66 | Führung |
| 27 | Aufnahmefläche | 67 | Ablage |
| 28 | Führung | 68 | Stützeelement |
| 29 | Linearführung | 69 | Stützfläche |
| 30 | Verstellantrieb | | |
| | | | |
| 31 | Antriebsmotor | | |
| 32 | Zahnriementrieb | | |
| 33 | Winkel | | |
| 34 | Steuerungsvorrichtung | | |
| 35 | Höhe | | |
| | | | |
| 36 | Körperabmessung | | |
| 37 | Schulterhöhe | | |
| 38 | Schachtwand | | |
| 39 | Schachtwand | | |
| 40 | Oberkante | | |

## Patentansprüche

1. Verfahren zum Kommissionieren von Gegenständen (15) aus Lagerbehältern (4) in Auftragsbehälter (5) durch eine Kommissionierperson (2) an einer Kommissionierstation (3), bei dem ein Lagerbehälter (4) mittels einer ersten Förderbahn (6) zur Kommissionierstation (3) angefördert und von einem Lastaufnahmemittel (22) von einem ersten Niveau (20) von der ersten Förderbahn (6) übernommen und auf ein zweites Niveau (24) bewegt wird, in welchem der Lagerbehälter (4) sich in einer Bereitstellungsposition (25) für die Kommissionierperson (2) befindet und von dieser Gegenstände (15) aus einem Lagerbehälter (4) in zumindest einen Auftragsbehälter (5) kommissioniert werden,
**dadurch gekennzeichnet, dass**
ein Lagerbehälter (4) nach der Beendigung eines Kommissioniervorganges von der Kommissionierstation (3) über die erste Förderbahn (6) zu einer Übergabestation (11) und dort über einen Übergabeförderer (12) auf eine zweite Förderbahn (7) gefördert wird, auf der Lagerbehälter (4) und Auftragsbehälter (5) transportiert werden.

2. Verfahren nach Anspruch 1, **dadurch gekennzeichnet, dass** der Lagerbehälter (4) bei der Bewegung zwischen dem ersten Niveau (20) und dem zweiten Niveau (24) in einer zur Kommissionierperson (2) hin geneigten Lage gehalten wird, wobei nach einem Kommissioniervorgang das Lastaufnahmemittel (22) mit dem Lagerbehälter (4) wieder vom zweiten Niveau (24) auf das erste Niveau (20) bewegt wird, in welchem der Lagerbehälter (4) auf die erste Förderbahn (6) übergeben wird.

3. Kommissioniersystem (1) zum Kommissionieren von Gegenständen (15) aus Lagerbehältern (4) in Auftragsbehälter (5) durch eine Kommissionierperson (2), mit einer Kommissionierstation (3), welche an eine erste Förderbahn (6) zum Transport von Lagerbehältern (4) und eine zweite Förderbahn (7) zumindest zum Transport von Auftragsbehältern (5) angeschlossen ist,
**dadurch gekennzeichnet, dass**
das Kommissioniersystem (1) ferner eine von der Kommissionierstation (3) getrennt angeordnete Übergabestation (11) zur Übergabe eines Lagerbehälters (4) zwischen der ersten Förderbahn (6) und der zweiten Förderbahn (7) umfasst, an der ein Übergabeförderer (12) die erste Förderbahn (6) mit der zweiten Förderbahn (7) verbindet.

4. Kommissioniersystem (1) nach Anspruch 3, **dadurch gekennzeichnet, dass** die Übergabestation (3) an einem Stirnende der ersten Förderbahn (6) angeordnet ist.

5. Kommissioniersystem (1) nach Anspruch 3 oder 4, **dadurch gekennzeichnet, dass** die Kommissionierstation (3) ein zwischen einem ersten Niveau (20) und einem zweiten Niveau (24) verfahrbares Lastaufnahmemittel (22) aufweist, welches dazu eingerichtet ist, von dem ersten Niveau (20) einen Lagerbehälter (4) von der ersten Förderbahn (6) zu übernehmen und auf dem zweiten Niveau (24) einen Lagerbehälter (4) in einer Bereitstellungsposition (25) für die Kommissionierperson (2) anzudienen, wobei das Lastaufnahmemittel (22) eine Aufnahmefläche (27) aufweist, die den Lagerbehälter (4) zwischen dem ersten Niveau (20) und dem zweiten Niveau (24) in einer um einen Winkel (26) zur Kommissionierperson (2) hin geneigten Lage stützt.

6. Kommissioniersystem (1) nach Anspruch 5, **dadurch gekennzeichnet, dass** das Lastaufnahmemittel (22) an einer Führung (28) translatorisch, insbesondere geradlinig, zwischen dem ersten Niveau (20) und dem zweiten Niveau (24) verstellbar geführt ist und die Führung (28) gegenüber der Vertikalen um einen Winkel (33) mit einer unteren Grenze von 5° und einer oberen Grenze von 30°, vorzugsweise um einen Winkel von 15°, in Richtung zur Kommissionierperson (2) geneigt ist.

7. Kommissioniersystem (1) nach Anspruch 5 oder 6, **dadurch gekennzeichnet, dass** diese einen sich zwischen dem ersten Niveau (20) und dem zweiten Niveau (24) erstreckenden Schacht aufweist, innerhalb welchem der Lagerbehälter (4) am Lastaufnahmemittel (22) zwischen dem ersten Niveau (20) und dem zweiten Niveau (24) bewegbar ist.

8. Kommissioniersystem (1) nach Anspruch 6 und Anspruch 7, **dadurch gekennzeichnet, dass** der Schacht beidseits zum Lastaufnahmemittel (22) parallel verlaufende erste und zweite Schachtwände (39) und eine der Kommissionierperson (2) zugewandte dritte Schachtwand (38) aufweist, wobei die dritte Schachtwand (38) mit einem Spaltabstand zum Lastaufnahmemittel (22) parallel zu einem Führungsverlauf der Führung (28) verläuft.

9. Kommissioniersystem (1) nach Anspruch 7 oder 8, **dadurch gekennzeichnet, dass** die erste Schachtwand (39) und/oder zweite Schachtwand (39) und/oder dritte Schachtwand (38) an ihrer(n) Innenseite(n) eine Begrenzungsfläche(n) für den Lagerbehälter (4) ausbilden.

10. Kommissioniersystem (1) nach einem der Ansprüche 5 bis 9, **dadurch gekennzeichnet, dass** das Lastaufnahmemittel (22) im zweiten Niveau (24) in der Bereitstellungsposition (25) von schachtartigen, insbesondere parallel zur Führung (28) verlaufenden, Begrenzungswänden (39) umgeben ist, deren lichter Querschnitt die Bewegung der Lagerbehälter (4) zwischen dem ersten Niveau (20) und dem zweiten Niveau (24) zulässt, und die Aufnahmefläche (27) des Lastaufnahmemittels (22) im normalen Kommissionierbetrieb nicht über die Oberkante (40) der Begrenzungswände (39) oder des Trennwandelements (38) verstellbar ist.

11. Kommissioniersystem (1) nach einem der Ansprüche 5 bis 10, **dadurch gekennzeichnet, dass** ein Verstellantrieb (30) des Lastaufnahmemittels (22) mit einer Steuerungsvorrichtung (34) des Kommissioniersystems (1) verbunden ist, welche dazu eingerichtet ist dem Verstellantrieb (30) einen Wert für das zweite Niveau (24) der Bereitstellungsposition (25) vorzugeben, wobei der Wert basierend auf der Höhe (35) der Lagerbehälter (4) errechnet wird und/oder mit einer Körperabmessung (36) oder der Identität der Kommissionierperson (2) verknüpft ist.

12. Kommissioniersystem (1) nach einem der Ansprüche 5 bis 11, **dadurch gekennzeichnet, dass** benachbart zur Bereitstellungsposition (25), insbesondere aus Sicht der Kommissionierperson (2) beidseits dazu Stellplätze (47) für zu befüllende Auftragsbehälter (5) angeordnet sind, wobei die Stellplätze (47) vorzugsweise niedriger angeordnet sind, als die Oberkante eines Lagerbehälters (4) in Bereitstellungsposition (25).

13. Kommissioniersystem (1) nach Anspruch 12, **dadurch gekennzeichnet, dass** die Stellplätze (47) als Gleitflächen oder manuell oder motorisch antreibbare Förderer (49) ausgebildet sind oder durch solche an die zweite Förderbahn (7) angeschlossen sind.

14. Kommissioniersystem (1) nach einem der Ansprüche 5 bis 13, **dadurch gekennzeichnet, dass** zumindest zwei voneinander unabhängige und mit eigenen Verstellantrieben (30, 30') versehene Lastaufnahmemittel (22, 22') vorgesehen sind, wodurch Lagerbehälter (4) in zwei, insbesondere nebeneinander angeordneten Bereitstellungspositionen (25) angedient werden können.

15. Kommissioniersystem (1) nach einem der Ansprüche 3 oder 5, **dadurch gekennzeichnet, dass** die Kommissionierstation (3) ein zwischen einem ersten Niveau (20) und einem zweiten Niveau (24) verfahrbares Lastaufnahmemittel (22) aufweist, welches dazu eingerichtet ist, von dem ersten Niveau (20) einen Lagerbehälter (4) von der ersten Förderbahn (6) zu übernehmen und auf dem zweiten Niveau (24) einen Lagerbehälter (4) in einer Bereitstellungsposition (25) für die Kommissionierperson (2) anzudienen, und welches eine automatisierte Fördervorrichtung (51) aufweist, welche eine Aufnahmefläche (27) für einen Lagerbehälter (4) ausbildet und mit der ein Lagerbehälter (4) zwischen dem Lastaufnahmemittel (22) und der zweiten Förderbahn (7) transportierbar ist.

## Claims

1. Method for commissioning items (15) from storage containers (4) into order containers (5) by a picker (2) at a commissioning station (3), where a storage container (4) is conveyed to the commissioning station (3) by means of a first conveyor track (6) and is taken over by a load-bearing means (22) from a first level (20) of the first conveyor track (6) and moved to a second level (24) where the storage container (4) is in a pick-up position (25) for the picker (2), and the latter commissions items (15) out of a storage container (4) into at least one order container (5),
**characterized in that**
once the commissioning process has been completed, a storage container (4) is conveyed from the commissioning station (3) via the first conveyor track (6) to a transfer station (11), where it is conveyed by a transfer conveyor (12) onto a second conveyor track (7), where storage containers (4) and order containers (5) are transported on.

2. Method according to claim 1, **characterized in that** the storage container (4) when being moved between the first level (20) and the second level (24) is held in a position tilted towards the picker (2), the load-bearing means (22) with the storage container (4) being moved from the second level (24) to the first level (20) after a commissioning process, in which first level (20) the storage container (4) is transferred to the first conveyor track (6).

3. Commissioning system (1) for commissioning items (15) from storage containers (4) into order containers (5) by a picker (2), having a commissioning station (3) which is connected to a first conveyor track (6) for transporting storage containers (4), and to a second conveyor track (7) for at least transporting order containers (5),
**characterized in that**
the commissioning system (1) further comprises a transfer station (11), which is arranged to be separated from the commissioning station (3), for transferring a storage container (4) between the first conveyor track (6) and the second conveyor track (7) at which transfer station (11) a transfer conveyor (12) connects the first conveyor track (6) with the second conveyor track (7).

4. Commissioning system (1) according to claim 3, **characterized in that** the transfer station (3) is arranged at an end side of the first conveyor track (6).

5. Commissioning system (1) according to claim 3 or 4, **characterized in that** the commissioning station (3) has a load-bearing means (22) which can be displaced between a first level (20) and a second level (24), which load-bearing means (22) is configured to take over a storage container (4) from the first level (20) of the first conveyor track (6) and provide the picker (2) with a storage container (4) in a pick-up position (25) on the second level (24), the load-bearing means (22) having a bearing surface (27) which supports the storage container (4) between the first level (20) and the second level (24) in a position tilted towards the picker (2) at an angle (26).

6. Commissioning system (1) according to claim 5, **characterized in that** the load-bearing means (22) is guided at an guide (28) to be adjustable between the first level (20) and the second level (24) in a translational manner, in particular in a straight line, and the guide (28) is tilted with respect to the vertical about an angle (33) having a lower limit of 5° and an upper limit of 30°, preferably about an angle of 15 °, in the direction towards the picker (2).

7. Commissioning system (1) according to claim 5 or 6, **characterized in that** it has a duct extending between the first level (20) and the second level (24), inside which duct the storage container (4) can be moved at the load-bearing means (22) between the first level (20) and the second level (24).

8. Commissioning system (1) according to claim 6 and claim 7, **characterized in that** the duct has first and second duct walls (39) on both sides of the load-bearing means (22) which run parallel thereto and a third duct (38) wall facing the picker (2), the third duct wall (38) extending parallel to a guide course of the guide (28) at a gap space to the load-bearing means (22).

9. Commissioning system (1) according to claim 7 or 8, **characterized in that** the first duct wall (39) and/or the second duct wall (39) and/or the third duct wall (38) form(s) limiting wall(s) for the storage container (4) at its/their inner face(s).

10. Commissioning system (1) according to one of claims 5 to 9, **characterized in that** the load-bearing means (22) in the second level (24) in the pick-up position (25) is surrounded by duct-like limiting walls (39), in particular running parallel to the guide (28), the clear diameter of which allows the storage container (4) to move between the first level (20) and the second level (24), and the bearing surface (27) of the load-bearing means (22) cannot be adjusted above the upper edge (40) of the limiting walls (39) or of the limiting wall element (38) during normal commissioning operation.

11. Commissioning system (1) according to one of claims 5 to 10, **characterized in that** a adjustment drive (30) of the load-bearing means (22) is connected with a control device (34) of the commissioning system (1), which control device is configured to provide the adjustment drive (30) with a value for the second level (24) of the pick-up position (25), the value being computed on the basis of the height (35) of the storage container (4) and/or being linked to a body measurement (36) or the identity of the picker (2).

12. Commissioning system (1) according to one of claims 5 to 11, **characterized in that** adjacent to the pick-up position (25), in particular seen from the position of the picker (2), depositing spaces (47) for the order containers (5) to be filled are arranged on both sides, the depositing spaces (47) preferably being disposed to be lower than the upper edge of a storage container (4) in the pick-up position (25).

13. Commissioning system (1) according to claim 12, **characterized in that** the depositing spaces (47) are designed as slide faces or as conveyors (49) that may be manually or motor driven, or are connected to the second conveyor track (7) by means of such.

14. Commissioning system (1) according to one of claims 5 to 13, **characterized in that** at least two load-bearing means (22, 22') which are independent of one another and are equipped with own adjustment drives (30, 30') are provided, whereby storage containers (4) may be delivered in two, in particular adjacently arranged pick-up positions (25).

15. Commissioning system (1) according to one of claims 3 or 5, **characterized in that** the commissioning station (3) exhibits a load-bearing means (22) which can be displaced between a first level (20) and a second level (24), which load-bearing means is configured to take over a storage container (4) from the first level (20) of the first conveyor track (6) and deliver a storage container (4) to the second level (24) in a pick-up position (25) for the picker (2), and which load-bearing means exhibits an automated conveyor device (51) forming a bearing surface (27) for the storage container (4) and by means of which a storage container (4) can be transported between the load-bearing means (22) and the second conveyor track (7).

## Revendications

1. Procédé de préparation de commandes d'objets (15) à partir de conteneurs de stockage (4) dans des conteneurs de commandes (5) par un préparateur de commandes (2) à un poste de préparation de commandes (3), dans lequel un conteneur de stockage (4) est amené au moyen d'un premier chemin de transport (6) jusqu'au poste de préparation de commandes (3) et il est pris par un moyen de levage de charge (22) depuis un premier niveau (20) du premier chemin de transport (6) et déplacé à un deuxième niveau (24), auquel le conteneur de stockage (4) se trouve dans une position de préparation (25) pour le préparateur de commandes (2) et des objets (15) sont préparés par ce dernier à partir d'un conteneur de stockage (4) dans au moins un conteneur de commande (5),
**caractérisé**
**en ce qu'**un conteneur de stockage (4) est transporté, après la fin d'une opération de préparation de commandes, depuis le poste de préparation de commandes (3), via le premier chemin de transport (6), jusqu'à un poste de transfert (11), et de là, transporté via un convoyeur de transfert (12) jusqu'à un deuxième chemin de transport (7) sur lequel des conteneurs de stockage (4) et des conteneurs de commandes (5) sont acheminés.

2. Procédé selon la revendication 1, **caractérisé en ce que** le conteneur de stockage (4), lors du déplacement entre le premier niveau (20) et le deuxième niveau (24), est maintenu dans une position inclinée en direction du préparateur de commandes (2), étant entendu qu'après une opération de préparation de commandes, le moyen de levage de charge (22) est à nouveau déplacé avec le conteneur de stockage (4) du deuxième niveau (24) au premier niveau (20), auquel le conteneur de stockage (4) est transféré sur le premier chemin de transport (6).

3. Système de préparation de commandes (1) pour la préparation de commandes d'objets (15) à partir de conteneurs de stockage (4) dans des conteneurs de commandes (5) par un préparateur de commandes (2), comprenant un poste de préparation de commandes (3) qui est adjoint à un premier chemin de transport (6) pour le transport de conteneurs de stockage (4) et à un deuxième chemin de transport (7) au moins pour le transport de conteneurs de commandes (5),
**caractérisé**
**en ce que** le système de préparation de commandes (1) comprend en outre un poste de transfert (11) agencé séparément du poste de préparation de commandes (3) pour le transfert d'un conteneur de stockage (4) entre le premier chemin de transport (6) et le deuxième chemin de transport (7), auquel un convoyeur de transfert (12) relie le premier chemin de transport (6) avec le deuxième chemin de transport (7).

4. Système de préparation de commandes (1) selon la revendication 3, **caractérisé en ce que** le poste de transfert (3) est agencé à une extrémité frontale du premier chemin de transport (6).

5. Système de préparation de commandes (1) selon la revendication 3 ou 4, **caractérisé en ce que** le poste de préparation de commandes (3) présente un moyen de levage de charge (22) pouvant être déplacé entre un premier niveau (20) et un deuxième niveau (24), qui est conçu pour prendre un conteneur de stockage (4) à partir du premier chemin de transport (6) au premier niveau (20) et desservir un conteneur de stockage (4) dans une position de préparation (25) pour le préparateur de commandes (2) au deuxième niveau (24), étant entendu que le moyen de levage de charge (22) présente une surface d'appui (27) qui soutient le conteneur de stockage (4) dans une position inclinée dans un angle (26) en direction du préparateur de commandes (2) entre le premier niveau (20) et le deuxième niveau (24).

6. Système de préparation de commandes (1) selon la revendication 5, **caractérisé en ce que** le moyen de levage de charge (22) est monté sur un guide (28) d'une manière réglable par translation, en particulier en ligne droite, entre le premier niveau (20) et le deuxième niveau (24) et **en ce que** le guide (28) est incliné par rapport à la verticale d'un angle (33) ayant une limite inférieure de 5° et une limite supérieure de 30°, de préférence d'un angle de 15°, en direction du préparateur de commandes (2).

7. Système de préparation de commandes (1) selon la revendication 5 ou 6, **caractérisé en ce qu'**il présente un puits s'étendant entre le premier niveau (20) et le deuxième niveau (24), à l'intérieur duquel le conteneur de stockage (4) peut être déplacé entre le premier niveau (20) et le deuxième niveau (24) sur le moyen de levage de charge (22).

8. Système de préparation de commandes (1) selon la revendication 6 et la revendication 7, **caractérisé en ce que** le puits présente des première et deuxième parois de puits (39) s'étendant parallèlement des deux côtés du moyen de levage de charge (22) et une troisième paroi de puits (38) dirigée vers le préparateur de commandes (2), étant entendu que la troisième paroi de puits (38) s'étend parallèlement à une trajectoire de course du guide (28) avec un écart de fente par rapport au moyen de levage de charge (22).

9. Système de préparation de commandes (1) selon la revendication 7 ou 8, **caractérisé en ce que** la première paroi de puits (39) et/ou la deuxième paroi de puits (39) et/ou la troisième paroi de puits (38) forme(nt) sur son ou leurs côtés intérieurs une ou des surfaces de délimitation pour le conteneur de stockage (4).

10. Système de préparation de commandes (1) selon l'une des revendications 5 à 9, **caractérisé en ce que** le moyen de levage de charge (22) est entouré au deuxième niveau (24), dans la position de préparation (25), de parois de délimitation (39) s'étendant d'une manière similaire à un puits, en particulier parallèlement au guide (28), dont la coupe transversale légère permet le déplacement des conteneurs de stockage (4) entre le premier niveau (20) et le deuxième niveau (24), et **en ce que** la surface d'appui (27) du moyen de levage de charge (22) n'est pas réglable, dans un fonctionnement normal de préparation de commandes, au-dessus de l'arête supérieure (40) des parois de délimitation (39) ou de l'élément de paroi de séparation (38).

11. Système de préparation de commandes (1) selon l'une des revendications 5 à 10, **caractérisé en ce qu'**un entraînement de réglage (30) du moyen de levage de charge (22) est relié à un dispositif de commande (34) du système de préparation de commandes (1), qui est conçu pour fixer une valeur à l'entraînement de réglage (30) pour le deuxième niveau (24) dans la position de préparation (25), étant entendu que cette valeur est calculée sur la base de la hauteur (35) des conteneurs de stockage (4) et/ou liée à une dimension corporelle (36) ou à l'identité du préparateur de commandes (2).

12. Système de préparation de commandes (1) selon l'une des revendications 5 à 11, **caractérisé en ce que** des places de rangement (47) pour des conteneurs de commandes (5) qui doivent être remplis sont agencées en position adjacente à la position de préparation (25), en particulier hors de la vue du préparateur de commandes (2), des deux côtés de cette position, étant entendu que les places de rangement (47) sont de préférence agencées plus bas que l'arête supérieure d'un conteneur de stockage (4) dans la position de préparation (25).

13. Système de préparation de commandes (1) selon la revendication 12, **caractérisé en ce que** les places de rangement (47) sont réalisées comme surfaces de glissement ou convoyeurs (49) pouvant être entraînés de façon manuelle ou motorisée ou adjointes au deuxième chemin de transport (7) par le biais de tels moyens.

14. Système de préparation de commandes (1) selon l'une des revendications 5 à 13, **caractérisé en ce qu'**il est prévu au moins deux moyens de levage de charge (22, 22') indépendants l'un de l'autre et pourvus de leurs propres entraînements de réglage (30, 30'), de sorte que des conteneurs de stockage (4) peuvent être desservis dans deux positions de préparation (25), en particulier agencées l'une à côté de l'autre.

15. Système de préparation de commandes (1) selon l'une des revendications 3 ou 5, **caractérisé en ce que** le poste de préparation de commandes (3) présente un moyen de levage de charge (22) pouvant être déplacé entre un premier niveau (20) et un deuxième niveau (24), qui est conçu pour prendre un conteneur de stockage (4) à partir du premier chemin de transport (6) au premier niveau (20) et desservir un conteneur de stockage (4) dans une position de préparation (25) pour le préparateur de commandes (2) au deuxième niveau (24), et qui présente un dispositif de transport automatisé (51) qui forme une surface d'appui (27) pour un conteneur de stockage (4) et peut être transporté avec ledit conteneur de stockage (4) entre le moyen de levage de charge (22) et le deuxième chemin de transport (7).
